# EUROPEAN PATENT APPLICATION

(11) **EP 2 833 467 A1**
(43) Date of publication of application: **04.02.2015**
(21) Application number: 13767951.0
(22) Date of filing: 27.03.2013
(51) Int. Cl.: H01M 10/0565, H01M 4/139, H01M 4/62, H01M 10/052, H01M 10/058

(54) **PROCESS AND DEVICE FOR PRODUCING LITHIUM-ION SECONDARY BATTERY**

(30) Priority: 30.03.2012 JP 2012079912; 11.04.2012 JP 2012089819
(71) Applicant: Kojima Industries Corporation, Toyota-shi, Aichi 471-0875 (JP)
(72) Inventor: NOGUCHI, Masumi, Toyota-shi Aichi 471-0875 (JP)
(74) Representative: Smith, Matthew
(86) International application number: PCT/JP2013/058929
(87) International publication number: WO 2013/146851

(57) **Abstract**

Provided is a technique for effectively producing a lithium-ion secondary battery which exhibits a stable cell performance, and has a high degree of freedom of choice of its shape, an improved output density and a reduced size, at a reduced cost. A lithium-ion secondary battery having a laminar body wherein a positive electrode layer and a negative electrode layer are laminated on respective opposite surfaces of a solid electrolyte layer is produced by: forming a first vapor-deposited polymer film while introducing a positive electrode active substance into the first vapor-deposited polymer film, to form the positive electrode layer; forming a second vapor-deposited polymer film while introducing a negative electrode active substance into the second vapor-deposited polymer film, to form the negative electrode layer; and forming a third vapor-deposited polymer film while introducing a lithium-ion conductivity rendering substance into the third vapor-deposited polymer film, to form the solid electrolyte layer.

## Description

### TECHNICAL FIELD

The present invention relates to a method of and an apparatus for producing a lithium-ion secondary battery, and more particularly to improvements of a method of producing an all solid type lithium-ion secondary battery having a laminar body (electric power generating element) wherein a positive electrode layer and a negative electrode layer are laminated on respective opposite surfaces of a solid electrolyte layer, and a novel structure of an apparatus for producing the above-described lithium-ion secondary battery.

### BACKGROUND ART

A lithium-ion secondary battery having a high energy density is widely used as an electric power source in portable electronic devices such as notebook personal computers and cellular or mobile phones. This lithium-ion secondary battery is generally classified into two kinds, namely, a lithium-ion secondary battery using a liquid-type electrolyte (including a liquid electrolyte and a gel-type electrolyte), and a so-called all solid type lithium-ion secondary battery using a solid electrolyte. Of these two kinds of lithium-ion secondary battery, the all solid type lithium-ion secondary battery does not have a risk of liquid leakage and firing, and has a higher degree of safety, unlike the lithium-ion secondary battery using the liquid-type electrolyte. In favor of this advantage, there have been growing developments in the field of the all solid type lithium-ion secondary battery, expecting a further increased demand for the all solid type lithium-ion secondary battery, and various methods of producing the all solid type lithium-ion battery have been proposed.

Japanese Patent No. 3852169 (Patent Document 1) discloses one example of a method of producing a lithium-ion secondary battery by forming positive and negative electrode layers in the form of organic polymer coating films containing active substances, and forming a solid electrolyte layer in the form of an organic polymer coating film containing an electrolyte salt compound, such that the positive and negative electrode layers are laminated on respective opposite surfaces of the solid electrolyte layer. JP-A-2010-251075 (Patent Document 2) discloses another method of producing a lithium-ion secondary battery by forming an inorganic positive electrode layer on a suitable substrate by sputtering, and forming an inorganic solid electrolyte layer on the positive electrode layer by sputtering, while forming an inorganic negative electrode layer on the solid electrolyte layer by vacuum vapor-deposition. Although these methods of producing a lithium-ion secondary battery disclosed in the above-described two documents have respective advantages, these methods still have several problems to be solved.

According to the method of producing the lithium-ion secondary battery disclosed in Patent Document 1, the positive and negative electrode layers and the solid electrolyte layer are all constituted by the organic polymer films. Accordingly, the positive and negative electrode layers and the solid electrolyte layer exhibit an adequate degree of flexibility or plasticity, so that the lithium-ion secondary battery produced according to this method has an adequate degree of flexibility or plasticity, and can advantageously exhibit an accordingly high degree of bending or flexural strength.

In the method of Patent Document 1, however, the positive and negative electrode layers and the solid electrolyte layer are constituted by coating films, which have thicknesses of several tens of µm, so that there is a limitation in the amount of reduction of the thicknesses of the positive and negative electrode layers and the solid electrolyte layer in an effort to reduce the overall size of the lithium-ion secondary battery and to improve its output density. Further, it was difficult to form the positive electrode layer and the solid electrolyte layer with a uniform thickness over an entire surface area of a current collector, in the case where the above-described surface of the current collector is not sufficiently flat with local recessed and raised portions being formed therein or thereon, which correspond to respective recessed and raised portions formed in or on a surface on which the lithium-ion secondary battery is to be installed, or respective recessed and raised portions of the current collector itself. Therefore, depending on the configuration of the surfaces of the current collector on which the positive and negative electrode layers are formed, the lithium-ion secondary battery may have difficulty in exhibiting a stable cell performance. Accordingly, the entire configuration of the lithium-ion secondary battery is limited to a generally plate-like shape, and freedom of choice of the entire shape of the lithium-ion secondary battery tends to be limited. Further, the production of the lithium-ion secondary battery requires an additional device for drying the positive and negative electrode layers and the solid electrolyte layer, which are formed in a wet process, so that the size of an apparatus for forming the positive and negative electrode layers and the solid electrolyte layer is increased, and the size of an apparatus for producing the lithium-ion secondary battery as a whole is accordingly increased, resulting in an inevitable increase of the running cost of these apparatuses. In addition, an extra time is required for drying the positive and negative electrode layers and the solid electrolyte layer after these layers are formed, giving rise to a problem that the required cycle time of production of each lithium-ion secondary battery is necessarily prolonged.

On the other hand, according to the method of producing the lithium-ion secondary battery disclosed in Patent Document 2, the positive electrode layer and the solid electrolyte layer are constituted by sputtering films, while the negative electrode layer is constituted by a vapor-deposited film. Accordingly, the positive and negative electrode layers and the solid electrolyte layer can be formed so as to have thicknesses on a scale of nanometers, which thicknesses are sufficiently reduced as compared with thicknesses of the positive and negative electrode layers and the solid electrolyte layer which are constituted by the coating films, whereby the lithium-ion secondary battery can have an effectively reduced size and an effectively increased output density. Further, the positive and negative electrode layers and the solid electrolyte layer are formed in a dry process, so that a device for drying the positive and negative electrode layers and the solid electrolyte layer is not required. As a result, an apparatus for producing the lithium-ion secondary battery can be advantageously simplified or have an advantageously reduced size.

In the method of Patent Document 2, however, the positive and negative electrode layers and the solid electrolyte layer are all formed of inorganic materials, so that the positive and negative electrode layers and the solid electrolyte layer exhibit a low degree of flexibility or plasticity. Further, the positive electrode layer and the solid electrolyte layer are formed by sputtering on a substrate (current collector or the like) made of a hard material, giving rise to a problem of reduction of bending or flexural strength of the lithium-ion secondary battery as a whole. Moreover, the positive electrode layer and the solid electrolyte layer are formed by sputtering, so that the rate of formation (amount of formation per unit time) of these layers is excessively low, giving rise to a problem that the required cycle time of production of each lithium-ion secondary battery is necessarily prolonged.

### PRIOR ART DOCUMENTS

### PATENT DOCUMENTS

Patent Document 1: Japanese Patent No. 3852169
Patent Document 2: JP-A-2010-251075

### SUMMARY OF THE INVENTION

### TECHNICAL PROBLEMS

The present invention was made in view of the background art described above. It is therefore a problem to be solved by the invention to provide a method of producing a lithium-ion secondary battery, which permits production of a lithium-ion secondary battery which can advantageously exhibit its cell performance with a high degree of stability irrespective of the configuration of the surfaces of the current collector on which the positive and negative electrode layers are formed, and which has effectively increased freedom of choice of its shape, an advantageously improved output density, an advantageously improved flexural strength and an advantageously reduced size, by using a production apparatus simplified as far as possible, with a reduced cycle time and at a reduced production cost. It is another problem to be solved by the invention to provide an apparatus which permits production of the lithium-ion secondary battery having the above-described advantages, with a reduced cycle time and at a reduced production cost.

### SOLUTION TO PROBLEMS

The above-described problem can be solved according to the principle of the invention which provides a method of producing a lithium-ion secondary battery having a laminar body wherein a positive electrode layer and a negative electrode layer are laminated on respective opposite surfaces of a solid electrolyte layer, the method being characterized by comprising the steps of: forming a first vapor-deposited polymer film by a vapor-deposition polymerization process while introducing a positive electrode active substance into the first vapor-deposited polymer film, to form the positive electrode layer constituted by the first vapor-deposited polymer film containing the positive electrode active substance; forming a second vapor-deposited polymer film by the vapor-deposition polymerization process while introducing a negative electrode active substance into the second vapor-deposited polymer film, to form the negative electrode layer constituted by the second vapor-deposited polymer film containing the negative electrode active substance; and forming a third vapor-deposited polymer film by the vapor-deposition polymerization process while introducing a lithium-ion conductivity rendering substance into the third vapor-deposited polymer film, to form the solid electrolyte layer constituted by the third vapor-deposited polymer film containing the lithium-ion conductivity rendering substance and having lithium-ion conductivity. It is noted that the vapor-deposited polymer film as defined in the specification and appended claims includes not only a film formed by a vacuum vapor-deposition polymerization process, but also a film obtained by subjecting a precursor in the form of a film formed by the vacuum vapor-deposition process to a predetermined treatment.

According to one preferred form of the invention, the positive electrode active substance is introduced into the first vapor-deposited polymer film by blowing a first carrier gas in which the positive electrode active substance is dispersed, onto the first vapor-deposited polymer film, and the negative electrode active substance is introduced into the second vapor-deposited polymer film by blowing a second carrier gas in which the negative electrode active substance is dispersed, onto the second vapor-deposited polymer film, while the lithium-ion conductivity rendering substance is introduced into the third vapor-deposited polymer film by blowing a third carrier gas in which the lithium-ion conductivity rendering substance is dispersed, onto the third vapor-deposited polymer film.

According to another preferred form of the invention, the lithium-ion conductivity rendering substance is a lithium salt, and the third vapor-deposited polymer film contains an ion-conductive polymer.

According to a further preferred form of the invention, the lithium-ion conductivity rendering substance is an ion-conductive polymer in a liquid state in which a lithium salt is dissolved.

According to a still another preferred form of the invention, the first vapor-deposited polymer film and the second vapor-deposited polymer film have electron conductivity.

According to a yet further preferred form of the invention, the step of forming the positive electrode layer comprising introducing vapors of a plurality of materials for forming the positive electrode layer, into a reaction chamber in an evacuated state, so that the introduced vapors are polymerized to form the first vapor-deposited polymer film, and at the same time introducing the positive electrode active substance into the first vapor-deposited polymer film, whereby the positive electrode layer is formed, and the step of forming the solid electrolyte layer comprising introducing vapors of a plurality of materials for forming the solid electrolyte layer, into the reaction chamber, after a predetermined length of time has passed after initiation of the step of forming the positive electrode layer, so that the introduced vapors are polymerized to form the third vapor-deposited polymer film, and at the same time introducing the lithium-ion conductivity rendering substance into the third vapor-deposited polymer film, whereby the solid electrolyte layer is formed on the positive electrode layer, wherein amounts of introduction of the vapors of the plurality of materials for forming the positive electrode layer into the reaction chamber are gradually reduced to zero after initiation of introduction of the vapors of the plurality of materials for forming the solid electrolyte layer into the reaction chamber, so that polymerization of the plurality of materials for forming the positive electrode layer and polymerization of the plurality of materials for forming the solid electrolyte layer take place concurrently with each other, to form a first mixture layer on the positive electrode layer, before formation of the solid electrolyte layer, the first mixture layer being formed of a mixture consisting of a product obtained by the polymerization of the plurality of materials for forming the positive electrode layer and a product obtained by the polymerization of the plurality of materials for forming the solid electrolyte layer.

According to another preferred form of the invention, the step of forming the solid electrolyte layer comprising introducing vapors of a plurality of materials for forming the solid electrolyte layer, into a reaction chamber in an evacuated state, so that the introduced vapors are polymerized to form the third vapor-deposited polymer film, and at the same time introducing the lithium-ion conductivity rendering substance into the third vapor-deposited polymer film, whereby the solid electrolyte layer is formed, and the step of forming the positive electrode layer comprising introducing vapors of a plurality of materials for forming the positive electrode layer, into the reaction chamber, after a predetermined length of time has passed after initiation of the step of forming the solid electrolyte layer, so that the introduced vapors are polymerized to form the first vapor-deposited polymer film, and at the same time introducing the positive electrode active substance into the first vapor-deposited polymer film, whereby the positive electrode layer is formed on the solid electrolyte layer, wherein amounts of introduction of the vapors of the plurality of materials for forming the solid electrolyte layer into the reaction chamber are gradually reduced to zero after initiation of introduction of the vapors of the plurality of materials for forming the negative electrode layer into the reaction chamber, so that polymerization of the plurality of materials for forming the solid electrolyte layer and polymerization of the plurality of materials for forming the positive electrode layer take place concurrently with each other, to form a first mixture layer on the solid electrolyte layer, before formation of the positive electrode layer, the first mixture layer being formed of a mixture consisting of a product obtained by the polymerization of the plurality of materials for forming the solid electrolyte layer and a product obtained by the polymerization of the plurality of materials for forming the positive electrode layer.

According to a further preferred form of the invention, the step of forming the solid electrolyte layer comprising introducing vapors of a plurality of materials for forming the solid electrolyte layer, into a reaction chamber in an evacuated state, so that the introduced vapors are polymerized to form the third vapor-deposited polymer film, and at the same time introducing the lithium-ion conductivity rendering substance into the third vapor-deposited polymer film, whereby the solid electrolyte layer is formed, and the step of forming the negative electrode layer comprising introducing vapors of a plurality of materials for forming the negative electrode layer, into the reaction chamber, after a predetermined length of time has passed after initiation of the step of forming the solid electrolyte layer, so that the introduced vapors are polymerized to form the second vapor-deposited polymer film, and at the same time introducing the negative electrode active substance into the second vapor-deposited polymer film, whereby the negative electrode layer is formed on the solid electrolyte layer, wherein amounts of introduction of the vapors of the plurality of materials for forming the solid electrolyte layer into the reaction chamber are gradually reduced to zero after initiation of introduction of the vapors of the plurality of materials for forming the negative electrode layer into the reaction chamber, so that polymerization of the plurality of materials for forming the solid electrolyte layer and polymerization of the plurality of materials for forming the negative electrode layer take place concurrently with each other, to form a second mixture layer on the solid electrolyte layer, before formation of the negative electrode layer, the second mixture layer being formed of a mixture consisting of a product obtained by the polymerization of the plurality of materials for forming the solid electrolyte layer and a product obtained by the polymerization of the plurality of materials for forming the negative electrode layer.

According to a still another preferred form of the invention, the step of forming the negative electrode layer comprising introducing vapors of a plurality of materials for forming the negative electrode layer, into a reaction chamber in an evacuated state, so that the introduced vapors are polymerized to form the second vapor-deposited polymer film, and at the same time introducing the negative electrode active substance into the second vapor-deposited polymer film, whereby the negative electrode layer is formed, and the step of forming the solid electrolyte layer comprising introducing vapors of a plurality of materials for forming the solid electrolyte layer, into the reaction chamber, after a predetermined length of time has passed after initiation of the step of forming the negative electrode layer, so that the introduced vapors are polymerized to form the third vapor-deposited polymer film, and at the same time introducing the lithium-ion conductivity rendering substance into the third vapor-deposited polymer film, whereby the solid electrolyte layer is formed on the negative electrode layer, wherein amounts of introduction of the vapors of the plurality of materials for forming the negative electrode layer into the reaction chamber are gradually reduced to zero after initiation of introduction of the vapors of the plurality of materials for forming the solid electrolyte layer into the reaction chamber, so that polymerization of the plurality of materials for forming the negative electrode layer and polymerization of the plurality of materials for forming the solid electrolyte layer take place concurrently with each other, to form a second mixture layer on the negative electrode layer, before formation of the solid electrolyte layer, the second mixture layer being formed of a mixture consisting of a product obtained by the polymerization of the plurality of materials for forming the negative electrode layer and a product obtained by the polymerization of the plurality of materials for forming the solid electrolyte layer.

According to a yet further preferred form of the invention, the method of producing a lithium-ion secondary battery further comprises the steps of: forming a positive electrode collector by vapor-deposition of a metallic material on one of opposite surfaces of the positive electrode layer, which surface is remote from the solid electrolyte layer; and forming a negative electrode collector by vapor-deposition of a metallic material on one of opposite surfaces of the negative electrode layer, which surface is remote from the solid electrolyte layer.

According to another preferred form of the invention, the step of forming the positive electrode collector comprising introducing a vapor of the metallic material for forming the positive electrode collector, into a reaction chamber in an evacuated state, so that the introduced vapor is deposited on a substrate disposed within the vacuum chamber, whereby the positive electrode collector is formed, and the step of forming the positive electrode layer comprising introducing vapors of a plurality of materials for forming the positive electrode layer, into the reaction chamber, after a predetermined length of time has passed after initiation of the step of forming the positive electrode collector, so that the introduced vapors are polymerized to form the first vapor-deposited polymer film, and at the same time introducing the positive electrode active substance into the first vapor-deposited polymer film, whereby the positive electrode layer is formed on the positive electrode collector, wherein an amount of introduction of the vapor of the metallic material for forming the positive electrode collector into the reaction chamber is gradually reduced to zero after initiation of introduction of the vapors of the plurality of materials for forming the positive electrode layer into the reaction chamber, so that deposition of the vapor of the metallic material for forming the positive electrode collector on the substrate and polymerization of the plurality of materials for forming the positive electrode layer take place concurrently with each other, to form a third mixture layer on the positive electrode collector, before formation of the positive electrode layer, the third mixture layer being formed of a mixture consisting of the metallic material for forming the positive electrode collector and a product obtained by the polymerization of the plurality of materials for forming the positive electrode layer.

According to a further preferred form of the invention, the step of forming the positive electrode layer comprising introducing vapors of a plurality of materials for forming the positive electrode layer, into a reaction chamber in an evacuated state, so that the introduced vapors are polymerized to form the first vapor-deposited polymer film, and at the same time introducing the positive electrode active substance into the first vapor-deposited polymer film, whereby the positive electrode layer is formed, and the step of forming the positive electrode collector comprising introducing a vapor of the metallic material for forming the positive electrode collector, into the reaction chamber, after a predetermined length of time has passed after initiation of the step of forming the positive electrode layer, so that the introduced vapor is deposited on the positive electrode layer, whereby the positive electrode collector is formed, wherein amounts of introduction of the vapors of the plurality of materials for forming the positive electrode layer into the reaction chamber are gradually reduced to zero after initiation of introduction of the metallic material for forming the positive electrode collector into the reaction chamber, so that polymerization of the plurality of materials for forming the positive electrode layer and deposition of the vapor of the metallic material for forming the positive electrode collector on the positive electrode layer take place concurrently with each other, to form a third mixture layer on the positive electrode layer, before formation of the positive electrode collector, the third mixture layer being formed of a mixture consisting of a product obtained by the polymerization of the plurality of materials for forming the positive electrode layer and the metallic material for forming the positive electrode collector.

According to a still another preferred form of the invention, the step of forming the negative electrode collector comprising introducing a vapor of the metallic material for forming the negative electrode collector, into a reaction chamber in an evacuated state, so that the introduced vapor is deposited on a substrate disposed within the vacuum chamber, whereby the negative electrode collector is formed, and the step of forming the negative electrode layer comprising introducing vapors of a plurality of materials for forming the negative electrode layer, into the reaction chamber, after a predetermined length of time has passed after initiation of the step of forming the negative electrode collector, so that the introduced vapors are polymerized to form the second vapor-deposited polymer film, and at the same time introducing the negative electrode active substance into the second vapor-deposited polymer film, whereby the negative electrode layer is formed on the negative electrode collector, wherein an amount of introduction of the vapor of the metallic material for forming the negative electrode collector into the reaction chamber is gradually reduced to zero after initiation of introduction of the vapors of the plurality of materials for forming the negative electrode layer into the reaction chamber, so that deposition of the vapor of the metallic material for forming the negative electrode collector on the substrate and polymerization of the plurality of materials for forming the negative electrode layer take place concurrently with each other, to form a fourth mixture layer on the negative electrode collector, before formation of the negative electrode layer, the fourth mixture layer being formed of a mixture consisting of the metallic material for forming the negative electrode collector and a product obtained by the polymerization of the plurality of materials for forming the negative electrode layer.

According to a yet further preferred from of the invention, the step of forming the negative electrode layer comprising introducing vapors of a plurality of materials for forming the negative electrode layer, into a reaction chamber in an evacuated state, so that the introduced vapors are polymerized to form the second vapor-deposited polymer film, and at the same time introducing the negative electrode active substance into the second vapor-deposited polymer film, whereby the negative electrode layer is formed, and the step of forming the negative electrode collector comprising introducing a vapor of the metallic material for forming the negative electrode collector, into the reaction chamber, after a predetermined length of time has passed after initiation of the step of forming the negative electrode layer, so that the introduced vapor is deposited on the negative electrode layer, whereby the negative electrode collector is formed, wherein amounts of introduction of the vapors of the plurality of materials for forming the negative electrode layer into the reaction chamber are gradually reduced to zero after initiation of introduction of the metallic material for forming the negative electrode collector into the reaction chamber, so that polymerization of the plurality of materials for forming the negative electrode layer and deposition of the vapor of the metallic material for forming the negative electrode collector on the negative electrode layer take place concurrently with each other, to form a fourth mixture layer on the negative electrode layer, before formation of the negative electrode collector, the fourth mixture layer being formed of a mixture consisting of a product obtained by the polymerization of the plurality of materials for forming the negative electrode layer and the metallic material for forming the negative electrode collector.

The above-described another problem can be solved according to another principle of the invention which provides an apparatus for producing a lithium-ion secondary battery having a laminar body wherein a positive electrode layer and a negative electrode layer are laminated on respective opposite surfaces of a solid electrolyte layer, characterized by comprising: (a) a vacuum chamber in which a substrate is accommodated; (b) evacuating means for evacuating an interior space of the vacuum chamber by discharging air within the vacuum chamber; (c) a positive electrode layer forming unit configured to form the positive electrode layer constituted by a first vapor-deposited polymer film containing a positive electrode active substance, the positive electrode layer forming unit including first vapor-deposited polymer film forming means for forming the first vapor-deposited polymer film by a vapor-deposition polymerization process, within the vacuum chamber in an evacuated state, and positive electrode active substance introducing means for introducing the positive electrode active substance into the first vapor-deposited polymer film, during formation of the first vapor-deposited polymer film; (d) a negative electrode layer forming unit configured to form the negative electrode layer constituted by a second vapor-deposited polymer film containing a negative electrode active substance, the negative electrode layer forming unit including second vapor-deposited polymer film forming means for forming the second vapor-deposited polymer film by the vapor-deposition polymerization process, within the vacuum chamber in the evacuated state, and negative electrode active substance introducing means for introducing the negative electrode active substance into the second vapor-deposited polymer film, during formation of the second vapor-deposited polymer film; and (e) a solid electrolyte layer forming unit configured to form the solid electrolyte layer constituted by a third vapor-deposited polymer film containing a lithium-ion conductivity rendering substance, the solid electrolyte layer forming unit including third vapor-deposited polymer film forming means for forming the third vapor-deposited polymer film by the vapor-deposition polymerization process, within the vacuum chamber in the evacuated state, and lithium-ion conductivity rendering substance introducing means for introducing the lithium-ion conductivity rendering substance into the third vapor-deposited polymer film, during formation of the third vapor-deposited polymer film; wherein the positive electrode layer forming unit, the negative electrode layer forming unit and the solid electrolyte layer forming unit cooperate with each other to form the laminar body on the substrate accommodated within the vacuum chamber.

According to another preferred form of the invention, the positive electrode active substance introducing means of the positive electrode layer forming unit is configured to introduce the positive electrode active substance into the first vapor-deposited polymer film by blowing a first carrier gas in which the positive electrode active substance is dispersed, onto the first vapor-deposited polymer film, during formation of the first vapor-deposited polymer film, and the negative electrode active substance introducing means of the negative electrode layer forming unit is configured to introduce the negative electrode active substance into the second vapor-deposited polymer film by blowing a second carrier gas in which the negative electrode active substance is dispersed, onto the second vapor-deposited polymer film, during formation of the second vapor-deposited polymer film, while the lithium-ion conductivity rendering substance introducing means of the solid electrolyte layer forming unit is configured to introduce the lithium-ion conductivity rendering substance into the third vapor-deposited polymer film by blowing a third carrier gas in which the lithium-ion conductivity rendering substance is dispersed, onto the third vapor-deposited polymer film, during formation of the third vapor-deposited polymer film.

According to a further preferred form of the invention, the third vapor-deposited polymer film forming means of the solid electrolyte layer forming unit is configured to form the third vapor-deposited polymer film containing an ion-conductive polymer, and the lithium-ion conductivity rendering substance introducing means is configured to introduce a lithium salt as the lithium-ion conductivity rendering substance, into the third vapor-deposited polymer film.

According to a still another preferred form of the invention, the lithium-ion conductivity rendering substance introducing means of the solid electrolyte layer forming unit is configured to introduce an ion-conductive polymer in a liquid state in which a lithium salt is dissolved, as the lithium-ion conductivity rendering substance, into the third vapor-deposited polymer film.

According to a yet further preferred form of the invention, the apparatus for producing a lithium-ion secondary battery further comprises: a positive electrode collector forming unit for forming a vapor-deposited metal film as a positive electrode collector on one of opposite surfaces of the positive electrode layer, which surface is remote from the solid electrolyte layer, by a vapor-deposition process within the vacuum chamber in the evacuated state; and a negative electrode collector forming unit for forming a vapor-deposited metal film as a negative electrode collector on one of opposite surfaces of the negative electrode layer, which surface is remote from the solid electrolyte layer, by the vapor-deposition process within the vacuum chamber in the evacuated state.

### ADVANTAGEOUS EFFECTS OF THE INVENTION

Namely, in the method of producing a lithium-ion secondary battery according to the invention, the positive and negative electrode layers and the solid electrolyte layer are all formed by the vapor-deposition polymerization process, which is a kind of a vacuum thin-film forming process like a sputtering process, and which permits formation of the vapor-deposited polymer films of organic polymers with extremely small thicknesses of several tens of nm to several tens of µm over an entire surface area of a substrate irrespective of the configuration of the surface of the substrate, and at a high rate of film formation.

Therefore, according to the method of producing a lithium-ion secondary battery of this invention, it is possible to extremely advantageously produce a lithium-ion secondary battery which can advantageously exhibit its cell performance with a high degree of stability irrespective of the configuration of the surfaces of the current collector on which the positive and negative electrode layers are formed, and which has effectively increased freedom of choice of its shape, an advantageously improved output density, an advantageously improved flexural strength and an advantageously reduced size, by using an apparatus simplified as far as possible, with a reduced cycle time and at a reduced production cost.

Further, by using the apparatus for producing a lithium-ion secondary battery according to the invention, it is possible to effectively achieve substantially the same operational and physical advantages as described above with respect to the method of the invention.

### BRIEF DESCRIPTION OF THE DRAWINGS

Fig. 1 is an enlarged fragmentary cross sectional view showing one example of a lithium-ion secondary battery produced according to a method of the invention;
Fig. 2 is a schematic view showing one example of an apparatus for producing the lithium-ion secondary battery according to the invention;
Fig. 3 is a view corresponding to that of Fig. 2, showing another example of an apparatus for producing the lithium-ion secondary battery according to the invention;
Fig. 4 is a view corresponding to that of Fig. 2, showing a still another example of an apparatus for producing the lithium-ion secondary battery according to the invention;
Fig. 5 is an enlarged fragmentary cross sectional view showing another example of a lithium-ion secondary battery produced according to the invention;
Fig. 6 is a view corresponding to that of Fig. 2, showing a further example of an apparatus according the invention used for producing the lithium-ion secondary battery shown in Fig. 5;
Fig. 7 is a view corresponding to that of Fig. 1, showing a further example of a lithium-ion secondary battery produced according to the invention; and
Fig. 8 is a view corresponding to that of Fig. 2, showing a yet further example of an apparatus according to the invention used for producing the lithium-ion secondary battery shown in Fig. 7.

### MODES FOR CARRYING OUT THE INVENTION

To clarify the present invention more specifically, preferred embodiments of the invention will be described in detail by reference to the drawings.

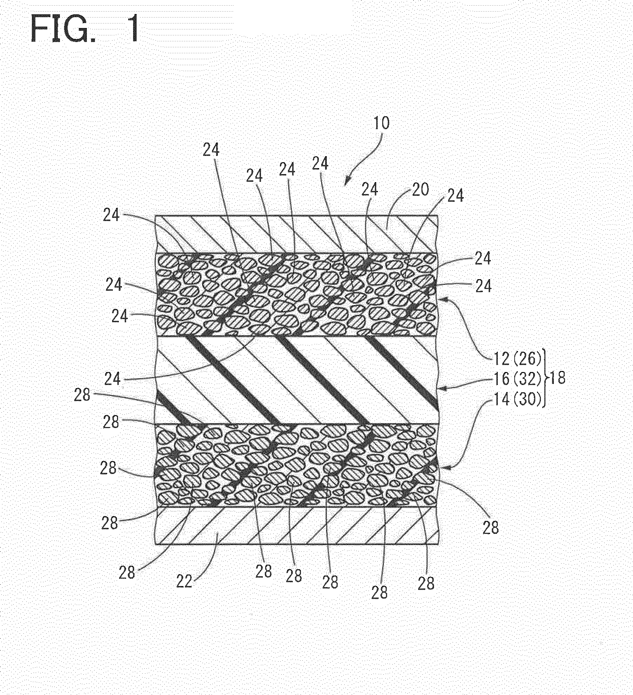

Referring first to the fragmentary longitudinal cross sectional view of Fig. 1, there is shown one example of a lithium-ion secondary battery 10 produced according to a method of this invention. As shown in Fig. 1, the lithium-ion secondary battery 10 has a laminar body 18 which functions as an electric power generating element, and which consists of a positive electrode layer 12, a negative electrode layer 14, and a solid electrolyte layer 16 in the form of thin films, wherein the positive and negative electrode layers 12, 14 are laminated on respective opposite surfaces of the solid electrolyte layer 16. Further, a positive electrode collector 20 is laminated on one of opposite surfaces of the positive electrode layer 12 of the laminar body 18, which surface is remote from the solid electrolyte layer 16, and a negative electrode collector 22 is laminated on one of opposite surfaces of the negative electrode layer 14, which surface is remote from the solid electrolyte layer 16.

In the lithium-ion secondary battery 10, the positive electrode layer 12 is constituted by a first vapor-deposited polymer film 26 containing a positive electrode active substance 24, while the negative electrode layer 14 is constituted by a second vapor-deposited polymer film 30 containing a negative electrode active substance 28.

More specifically described, in this embodiment, the positive electrode active substance 24 contained in the first vapor-deposited polymer film 26 is LiCoO₂. However, the positive electrode active substance 24 is not limited to LiCoO₂, but may be any active substance used in the prior art lithium-ion secondary battery. For instance, the positive electrode active substance 24 may be one or any combination of: Li(Ni-Mn-Co)O₂ (Ni of which may be partially replaced by Co or Mn); LiNiO₂; LiMn₂O₄; LiFePO₄; LiMnₓFe₁₋ₓPO₄; V₂O₅; V₆O₁₃; and TiS₂.

In this embodiment, the negative electrode active substance 28 contained in the second vapor-deposited polymer film 30 is natural graphite. However, the negative electrode active substance 28 is not limited to the natural graphite, but may be any active substance used in the prior art lithium-ion secondary battery. For instance, the negative electrode active substance 28 may be one or any combination of: hard carbon; carbon nano tubes; carbon nano walls; mesophase carbon micro beads; mesophase carbon fibers; lithium metals; lithium-aluminum alloys; intercalated lithium compounds in which lithium is intercalated in graphite or carbon; Li₄Ti₅O₁₂; Si; SiO; alloys of Si; Sn; SnO; alloys of Sn; and MnO₂.

The positive electrode active substance 24 and the negative electrode active substance 28 are respectively contained in the positive electrode layer 12 and the negative electrode layer 14, in the form of a multiplicity of particles or granules. The size of the particles or granules of the positive electrode active substance 24 and the negative electrode active substance 28 is not particularly limited, but the average size of the primary particles measured by a scanning electron microscope, or the average size of the secondary particles which are agglomerates of the primary particles is generally selected within a range of about 10nm-50µm, since the average size of the primary or secondary particles larger than 50µm not only makes it difficult to reduce the thickness of the lithium-ion secondary battery 10, but also may cause a problem of reduction of the discharge capacity when the current density is relatively high, and since the average size of the primary or secondary particles smaller than 10nm results in an extreme increase of the surface area per unit weight of the positive and negative electrode active substances 24, 28, and an increase of the required amount of use of an auxiliary electrically conducive agent, giving rise to a risk of reduction of the energy density of the lithium-ion secondary battery 10.

The multiplicity of the particles or granules of the positive electrode active substance 24 are densely contained in the first vapor-deposited polymer film 26, such that the particles or granules are bonded together by a resin material of the first vapor-deposited polymer film 26, whereby the positive electrode layer 12 is formed as the thin film. The multiplicity of the particles or granules of the negative electrode active substance 28 are densely contained in the second vapor-deposited polymer film 30, such that the particles or granules are bonded together by a resin material of the second vapor-deposited polymer film 30, whereby the negative electrode layer 14 is formed as the thin film.

As described above, the positive electrode layer 12 and the negative electrode layer 14 are respectively constituted by the first vapor-deposited polymer film 26 and the second vapor-deposited polymer film 30 which are formed by a vapor-deposition polymerization process which is a kind of a vacuum dry process. Accordingly, the thicknesses of the positive and negative electrode layers 12, 14 can be controlled on the order of several tens of nanometers, and can therefore be controlled to be extremely small and uniform. Further, the amount of impurities contained in the positive and negative electrode layers 12, 14 is sufficiently reduced.

In this embodiment, each of the first and second vapor-deposited polymer films 26, 30 is formed of polyaniline, by irradiating polyurea with a ultraviolet radiation after the polyurea is formed by a known vapor-deposition polymerization process in vacuum, for example. Thus, the vapor-deposited polymer films 26, 30 have a sufficiently high degree of electron conductivity and exhibit an adequate degree of flexibility or plasticity.

As well known in the art, polymerization to obtain polyurea does not require heat treatment of amine (including diamine, triamine and tetraamine) and isocyanate (including diisocyanate, triisocyanate and tetraisocyanate) used as material monomers, and is carried out with a polyaddition polymerization reaction which does not involve any amount of removal of water and alcohol. Accordingly, the cost of formation of the first and second vapor-deposited polymer films 26, 30 of polyaniline obtained by irradiating polyurea with the ultraviolet radiation can be reduced in the absence of a need for using a device for the heat treatment in the process of polymerization of the material monomers, and a facility for discharging water and alcohol removed as a result of the polymerization reaction, from a reaction chamber in which the polymerization reaction takes place. Further, polyurea has a high moisture resistance, so that an advantageous effect is achieved in that the positive and negative electrode layers 12, 14 can exhibit a high degree of withstand voltage with higher stability.

The thicknesses of the positive electrode layer 12 constituted by the first vapor-deposited polymer film 26 and the negative electrode layer 14 constituted by the second vapor-deposited polymer film 30 are generally selected within a range of about 1-200µm, since the thicknesses of the positive and negative electrode layers 12, 14 smaller than 1µm result in insufficient amounts of the positive electrode active substance 24 in the positive electrode layer 12 and the negative electrode active substance 28 in the negative electrode layer 14, leading to a possibility of reduction of the energy density, and since the thicknesses larger than 200µm not only make it difficult to reduce the thickness and size of the lithium-ion secondary battery 10, but also gives rise to a risk of difficulty in obtaining a required amount of electric current due to an increase of the internal resistance (ion transfer resistance) of the positive and negative electrode layers 12, 14.

The resin materials used to form the first and second vapor-deposited polymer films 26, 30 are not limited to polyaniline given above by way of example. Namely, the first and second vapor-deposited polymer films 26, 30 may be formed of any other known resin materials which can be formed into a film by the vapor-deposition polymerization process, and which function as a binder for bonding together the multiplicity of particles or granules of the positive and negative electrode active substances 24, 28. For instance, the first and second vapor-deposited polymer films 26, 30 may be formed of polyurea, polyamide, polyimide, polyamideimide, polyester, polyurethane, polyazomethine, acrylic, polyparaxylylene, and perylene, other than polyaniline obtained by irradiating polyurea with a ultraviolet radiation.

Among the above-indicated resin materials, the resin materials which have electron conductivity owing to an auxiliary electrically conductive agent contained therein or without this auxiliary agent can be suitably used to form the first and second vapor-deposited polymer films 26, 30, since the resin materials having the electron conductivity permit a sufficient increase of the electron conductivity and an effective reduction of membrane resistance of the positive electrode layer 12, resulting in an advantageous improvement of the output density of the lithium-ion secondary battery 10.

In particular, the first and second vapor-deposited polymer films 26, 30 are preferably formed of so-called electron-conductive polymers which have a high degree of the electron conductivity in the absence of the auxiliary electrically conductive agent, and which can be formed by vapor-deposition polymerization. The use of these electron-conductive polymers increases the productivity of the lithium-ion secondary battery 10, owing to the elimination of a step of adding the auxiliary electrically conductive agent to the polymer. For example, the electron-conductive polymers include: polyurea which has a π-conjugated structure and a side chain of which is bonded to a sulfonic acid group or a carboxyl group; and polyaniline which is obtained by irradiating the polyurea with a ultraviolet radiation, which has a π-conjugated structure and a side chain of which is bonded to a sulfonic acid group or a carboxyl group.

Examples of the auxiliary electrically conductive agents which can be used to increase the electron conductivity of the first and second vapor-deposited polymer films 26, 30 include electrically conductive carbon powders such as carbon black and electrically conductive carbon fibers such as carbon nano fibers and carbon nano tubes.

On the other hand, materials used to form the positive electrode collector 20 on which the positive electrode layer 12 is formed, and the negative electrode collector 22 on which the negative electrode layer 14 is formed, are not particularly limited, and any conventionally used materials may be used. Namely, the positive and negative electrode collectors 20, 22 may be formed by using aluminum, copper, titanium, nickel, iron or other metallic materials, or alloys of those metallic materials. Among these materials, aluminum is preferably used to form the positive electrode collector 20, and copper is preferably used to form the negative electrode collector 22. In this embodiment, the positive electrode collector 20 is constituted by an aluminum foil, while the negative electrode collector 22 is constituted by a copper foil. The positive and negative electrode collectors 20, 22 may be constituted by vapor-deposited metal films formed by a known vapor-deposition process, other than the metallic foils.

The solid electrolyte layer 16 is constituted by a third vapor-deposited polymer film 32 having lithium ion conductivity. Namely, the solid electrolyte layer 16 is formed by the vapor-deposition polymerization process which is a kind of the vacuum dry process, like the positive and negative electrode layers 12, 14. Accordingly, the thickness of the solid electrolyte layer 16 can also be controlled on the order of several tens of nanometers, and can therefore be controlled to be extremely small and uniform. Further, the amount of impurities contained in the solid electrolyte layer 16 is sufficiently reduced.

In this embodiment, the third vapor-deposited polymer film 32 constituting the solid electrolyte layer 16 is formed of polyurea, so that like the positive and negative electrode layers 12, 14 constituted by the first and second vapor-deposited polymer films 26, 30 formed of polyaniline obtained by irradiating the polyurea with a ultraviolet radiation, the solid electrolyte layer 16 can be formed at an advantageously reduced cost, and can exhibit a high withstand voltage with higher stability. Further, the solid electrolyte layer 16 can exhibit an adequate degree of flexibility or plasticity.

Polyurea used to form the third vapor-deposited polymer film 32 has a repeating unit structure of polyethylene oxide represented by the following structural formula (1), and this polyethylene oxide contains a lithium salt, so that the third vapor-deposited polymer film 32 exhibits lithium ion conductivity.

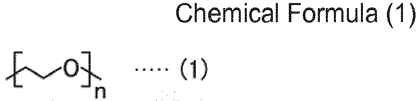

It is noted, however, that the material used to form the third vapor-deposited polymer film 32 which has lithium-ion conductivity and which constitutes the solid electrolyte layer 16 is not limited to polyurea given above by way of example. The third vapor-deposited polymer film 32 may be formed of any other known resin material which can be formed into a film by the vapor-deposition polymerization process, and which has lithium-ion conductivity.

Described more specifically, the resin material of the third vapor-deposited polymer film 32 may be selected from among: polyamide having a repeating unit structure of polyethylene oxide and containing a lithium salt in polyethylene oxide; polyimide having a repeating unit structure of polyethylene oxide and containing a lithium salt in polyethylene oxide; polyamideimide having a repeating unit structure of polyethylene oxide and containing a lithium salt in polyethylene oxide; polyester having a repeating unit structure of polyethylene oxide and containing a lithium salt in polyethylene oxide; polyurethane having a repeating unit structure of polyethylene oxide and containing a lithium salt in polyethylene oxide; polyazomethine having a repeating unit structure of polyethylene oxide and containing a lithium salt in polyethylene oxide; polyurea which contains a lithium salt and a side chain of which is bonded to a sulfonic acid group; polyamide which contains a lithium salt and a side chain of which is bonded to a sulfonic acid group; polyimide which contains a lithium salt and a side chain of which is bonded to a sulfonic acid group; polyamideimide which contains a lithium salt and a side chain of which is bonded to a sulfonic acid group; polyester which contains a lithium salt and a side chain of which is bonded to a sulfonic acid group; polyurethane which contains a lithium salt and a side chain of which is bonded to a sulfonic acid group; and polyazomethine which contains a lithium salt and a side chain of which is bonded to a sulfonic acid group.

In summary, the third vapor-deposited polymer film 32 which constitutes the solid electrolyte layer 16 and which has lithium-ion conductivity may be formed of the resin material (hereinafter referred to as "resin A") which has a repeating unit structure of polyethylene oxide, which contains a lithium salt in polyethylene oxide, and which can be formed into a film by the vapor-deposition polymerization process, or the resin material (hereinafter referred to as "resin B") which contains a lithium salt, a side chain of which is bonded to a sulfonic acid group, and which can be formed into a film by the vapor-deposition polymerization process. It is noted that the repeating unit structure of polyethylene oxide of the resin A may be bonded to the molecules of the resin A, or may not be bonded to the molecules but merely mixed in the resin A.

The lithium salt contained in the solid electrolyte layer 16 (third vapor-deposited polymer film 32) is an ion dissociation compound containing lithium, and is not particularly limited. Any kind of lithium salt conventionally used to impart lithium-ion conductivity to a desired resin material may be used. For instance, LiN(SO₂CF₃)₂, LiN(SO₂C₂F₅)₂, LiBF₄ and LiClO₄ may be used as the lithium salt to be contained in the solid electrolyte layer 16.

Although the thickness of the solid electrolyte layer 16 is not particularly limited, it is generally selected within a range of about 50nm-100µm, since the thickness of the solid electrolyte layer 16 smaller than 50nm makes it difficult to ensure sufficient electric insulation between the positive and negative electrode layers 12, 14, giving rise to a possibility of internal short-circuiting, and since the thickness larger than 100µm not only makes it difficult to reduce the thickness of the lithium-ion secondary battery 10, but also gives rise to a risk of reduction of the output density due to a high internal resistance of the solid electrolyte layer 16.

The lithium-ion secondary battery 10 is constituted by: the laminar body 18 wherein the positive and negative electrode layers 12, 14 are laminated on the respective opposite surfaces of the solid electrolyte layer 16; and the positive and negative electrode collectors 20, 22 which are laminated on respective opposite sides of the laminar body 18, as shown in Fig. 1. When the lithium-ion secondary battery 10 is in use, a positive terminal and a negative terminal (not shown) are generally connected to the respective positive and negative electrode collectors 20, 22, and the lithium-ion secondary battery 10 is covered with a known protective film having a laminar structure.

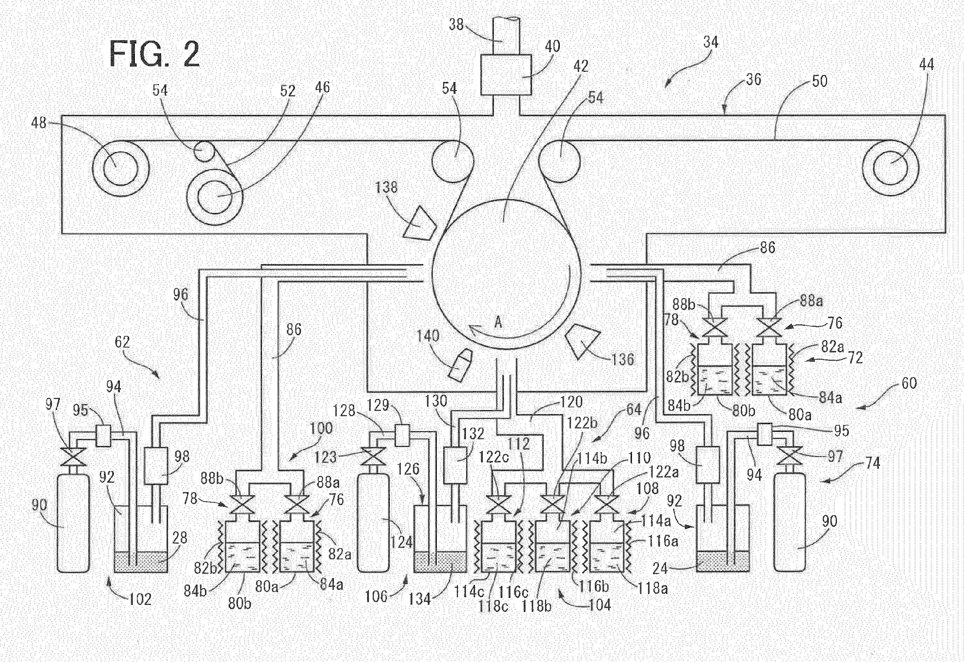

By the way, the lithium-ion secondary battery 10 having the above-described structure is produced by using a production apparatus 34 having a structure according to the present invention, as shown in Fig. 2, for example.

As is apparent from Fig. 2, the production apparatus 34 of this embodiment has a vacuum chamber 36 as a reaction chamber. An exhaust pipe 38 provided with a vacuum pump 40 is connected to the vacuum chamber 36, such that the exhaust pipe 38 communicates with an interior space of the vacuum chamber 36 through one side wall of the vacuum chamber 36. The vacuum pump 40 is operated to evacuate the interior space of the vacuum chamber 36, by discharging air out of the interior space through the exhaust pipe 38. It will be understood that the exhaust pipe 38 and the vacuum pump 40 constitute evacuating means in the present embodiment.

A main roller 42 is disposed within the vacuum chamber 36. Further, a first supply roller 44 and a second supply roller 46 are disposed within the vacuum chamber 36, on respective opposite sides of the main roller 42, so as to be spaced apart from the main roller 42. Further, a take-up roller 48 is disposed within the vacuum chamber 36, on one side of the second supply roller 46 which side is remote from the main roller 42, so as to be spaced apart from the second supply roller 46 by a predetermined spacing distance. The main roller 42 and the take-up roller 48 are configured so as to be rotated by operation of an electric motor not shown.

A roll of an aluminum foil strip 50 which constitutes the positive electrode collector 20 of the intended lithium-ion secondary battery 10 and which serves as a substrate is installed on the first supply roller 44. A portion of the aluminum foil strip 50 extending from the roll installed on the first supply roller 44 is partially wound on the main roller 42, and then fed from the main roller 42 so as to be wound on the take-up roller 48. On the other hand, a roll of a copper foil strip 52 which constitutes the negative electrode collector 22 of the lithium-ion secondary battery 10 is installed on the second supply roller 46. A portion of the copper foil strip 52 extending from the roll installed on the second supply roller 46 is superposed on one of opposite surfaces of the aluminum foil strip 50 fed from the main roller 42, before the aluminum foil strip 50 is wound on the take-up roller 48.

Thus, upon rotation of the main roller 42 and the take-up roller 48, the aluminum foil strip 50 extending from the roll installed on the first supply roller 44 is moved in rolling contact with the outer circumferential surface of the main roller 42 in one direction (indicated by an arrow A), and fed from the main roller 42 toward the take-up roller 48. Before the aluminum foil strip 50 is wound on the take-up roller 48, the copper foil strip 52 extending from the roll installed on the second supply roller 46 is superposed on the aluminum foil strip 50, and the aluminum foil strip 50 and the copper foil strip 52 superposed on each other are wound on the take-up roller 48. It is noted that reference numeral 54 in Fig. 2 denotes tension rollers.

On the other hand, a positive electrode layer forming unit 60, a negative electrode forming unit 62, and a solid electrolyte layer forming unit 64 are disposed outside the vacuum chamber 36.

The positive electrode layer forming unit 60 includes a first vapor-deposited polymer film forming device (first vapor-deposited polymer film forming means) 72 and a positive electrode active substance introducing device (positive electrode active substance introducing means) 74. The first vapor-deposited polymer film forming device 72 is configured to form the first vapor-deposited polymer film 26 by the vacuum vapor-deposition polymerization process, and has a first vapor source 76 and a second vapor source 78. These first and second vapor sources 76, 78 have respective material reservoirs 80a, 80b, and respective heaters 82a, 82b. The material reservoirs 80a, 80b of the first and second vapor sources 76, 78 accommodate respective two different kinds of material 84a, 84b for forming the first vapor-deposited polymer film 26. In the present embodiment wherein the first vapor-deposited polymer film 26 is formed of polyaniline, the material reservoir 80a accommodates aromatic diamine such as 1,4-phenylenediamine-2-sulfonic acid, as the material 84a in a liquid state, while the material reservoir 80b accommodates aromatic diisocyanate such as 1,4-phenylene diisocyanate, as the material 84b in a liquid state. These aromatic diamine and aromatic diisocyanate are material monomers for obtaining polyurea before irradiation with a ultraviolet radiation. These two kinds of material 84a, 84b accommodated in the respective material reservoirs 80a, 80b of the first and second vapor sources 76, 78 are heated and evaporated by the respective heaters 82a, 82b.

A vapor supply pipe 86 is provided to connect the material reservoirs 80a, 80b of the first and second vapor sources 76, 78 to the vacuum chamber 36. This vapor supply pipe 86 is open toward the outer circumferential surface of the main roller 42, at its end within the vacuum chamber 36, and is open at the other end to the material reservoirs 80a, 80b through respective shut-off valves 88a, 88b.

In the first vapor-deposited polymer film forming device 72 constructed as described above, the two materials 84a, 84b accommodated in the respective material reservoirs 80a, 80b of the first and second vapor sources 76, 78 are heated and evaporated by the respective heaters 82a, 82b, and the vapors of the two materials 84a, 84b are introduced into the vacuum chamber 36 through the vapor supply pipe 86 and the respective shut-off valves 88a, 88b placed in the open state, such that the vapors are blown onto the aluminum foil strip 50 being moved in rolling contact with the outer circumferential surface of the main roller 42.

The positive electrode active substance introducing device 74 has a gas cylinder 90 charged with a carrier gas (a first carrier gas) such as an argon gas, a nitrogen gas or any other inert gas, and a powder reservoir 92 accommodating the positive electrode active substance 24 (LiCoO₂ in this embodiment) in a powdered form. A gas supply pipe 94 is provided to connect the gas cylinder 90 to the powder reservoir 92, while a powder supply pipe 96 is provided to connect the powder reservoir 92 to the vacuum chamber 36. The powder supply pipe 96 is partially inserted within the vapor supply pipe 86 of the above-described first vapor-deposited polymer film forming device 72, such that the outlet end portion of the powder supply pipe 96 located within the vapor supply pipe 86 is open toward the outer circumferential surface of the main roller 42 disposed within the vacuum chamber 36, through the corresponding outlet end portion of the vapor supply pipe 86. Namely, the corresponding outlet end portions of the vapor supply pipe 86 and the powder supply pipe 96 on the side of the vacuum chamber 36 cooperate with each other to form a double-pipe structure.

In the thus constructed positive electrode active substance introducing device 74, the carrier gas supplied from the gas cylinder 90 is introduced into the powder reservoir 92 through the gas supply pipe 94 when a shut-off valve 97 provided adjacent to the gas cylinder 90 is open, so that the positive electrode active substance 24 accommodated within the powder reservoir 92 is dispersed by the carrier gas introduced into the powder reservoir 92, whereby the dispersed active substance 24 is introduced into the vacuum chamber 36, together with the carrier gas, through the powder supply pipe 96 partially inserted within the vapor supply pipe 86. Since the powder supply pipe 96 is partially inserted within the vapor supply pipe 86, the active substance 24 is mixed with the vapors of the two materials 84a, 84b, within the outlet end portion of the vapor supply pipe 86, and a mixture of the vapors of the two materials 84a, 84b, active substance 24 and carrier gas is blown from the outlet open end of the powder supply pipe 96 onto one of the opposite surfaces of the aluminum foil strip 50 being moved in rolling contact with the outer circumferential surface of the main roller 42, such that the mixture is blown at a predetermined circumferential position of the main roller 42. Thus, the positive electrode active substance introducing device 74 is configured to introduce the positive electrode active substance 24 into the first vapor-deposited polymer film 26, which is formed on the above-indicated one surface of the aluminum foil strip 50, by blowing the vapors of the two materials 84a, 84b onto the surface of the aluminum foil strip 50, as described later.

The gas supply pipe 94 is provided with a known mass flow controller 95, while the powder supply pipe 96 is provided with a known powder milling device 98. The mass flow controller 95 controls a flow rate of the carrier gas, for regulating a rate of introduction of the positive electrode active substance 24 into the vacuum chamber 36, while the powder milling device 98 mills or pulverizes the positive electrode active substance 24 flowing through the powder supply pipe 96 together with the carrier gas, for reducing the particle size of the positive electrode active substance 24, before the positive electrode active substance 24 is blown onto the above-indicated surface of the aluminum foil strip 50.

On the other hand, the negative electrode layer forming unit 62 includes a second vapor-deposited polymer film forming device (second vapor-deposited polymer film forming means) 100 and a negative electrode active substance introducing device (negative electrode active substance introducing means) 102. The second vapor-deposited polymer film forming device 100 is configured to form the second vapor-deposited polymer film 30 by the vacuum vapor-deposition polymerization process, and has the same construction as the first vapor-deposited polymer film forming device 72 of the positive electrode layer forming unit 60. Namely, the second vapor-deposited polymer film forming device 100 has first and second vapor sources 76 and 78 which have respective material reservoirs 80a, 80b and respective heaters 82a, 82b. A vapor supply pipe 86 is provided to connect the material reservoirs 80a, 80b of the first and second vapor sources 76 and 78 to the vacuum chamber 36, through respective shut-off valves 88a, 88b.

This vapor supply pipe 86 is open at its outlet end within the vacuum chamber 36, toward the outer circumferential surface of the main roller 42, at a position downstream of the outlet open end of the vapor supply pipe 86 of the positive electrode layer forming unit 60, in the direction of feeding of the aluminum foil strip 50 by the main roller 42. In the present embodiment wherein the second vapor-deposited polymer film 30 is formed of polyaniline, like the first vapor-deposited polymer film 26, the material reservoirs 80a, 80b of the second vapor-deposited polymer film forming device 100 accommodate, as the two materials 84a, 84b, the same materials as accommodated in the material reservoirs 80a, 80b of the first vapor-deposited polymer film forming device 72. Namely, the material reservoir 80a accommodates aromatic diamine such as 1,4-phenylenediamine-2-sulfonic acid, as the material 84a in a liquid state, while the material reservoir 80b accommodates aromatic diisocyanate such as 1,4-phenylene diisocyanate, as the material 84b in a liquid state. These aromatic diamine and aromatic diisocyanate are the material monomers for obtaining polyurea before irradiation with a ultraviolet radiation. In this respect, it is noted that the first vapor-deposited polymer film 26 and the second vapor-deposited polymer film 30 may be formed of different kinds of polyaniline.

Thus, like the first vapor-deposited polymer film forming device 72, the second vapor-deposited polymer film forming device 100 is configured to heat and evaporate the two kinds of material 84a, 84b accommodated in the respective material reservoirs 80a, 80b of the first and second vapor sources 76, 78, by the respective heaters 82a, 82b, and introduce the vapors of the evaporated materials 84a, 84b into the vacuum chamber 36 through the vapor supply pipe 86 when the respective shut-off valves 88a, 88b are open, so that the vapors of the materials 84a, 84b are blown onto the aluminum foil strip 50 being moved in rolling contact with the outer circumferential surface of the main roller 42.

Like the positive electrode active substance introducing device 74 of the positive electrode layer forming unit 56, the negative electrode active substance introducing device 102 has a gas cylinder 90, a powder reservoir 92, a gas supply pipe 94, a mass flow controller 95, a powder supply pipe 96 and a powder milling device 98. The gas cylinder 90 is charged with a carrier gas (a second carrier gas) such as an inert gas, and the powder reservoir 92 accommodates the negative electrode active substance 28 (natural graphite in this embodiment) in a powdered form. The outlet end portion of the powder supply pipe 96 is inserted within the outlet end portion of the vapor supply pipe 86 of the second vapor-deposited polymer film forming device 100, such that the outlet end portion of the powder supply pipe 96 located within the vapor supply pipe 86 is open toward the outer circumferential surface of the main roller 42, through the corresponding outlet end portion of the vapor supply pipe 86.

In the thus constructed negative electrode active substance introducing device 102, the carrier gas supplied from the gas cylinder 90 is introduced into the powder reservoir 92 when a shut-off valve 97 provided adjacent to the gas cylinder 90 is open, so that the negative electrode active substance 28 accommodated within the powder reservoir 92 is dispersed by the carrier gas introduced into the powder reservoir 92, whereby the dispersed active substance 28 is supplied to the outlet end portion of the vapor supply pipe 86, together with the carrier gas. The negative electrode active substance 28 is mixed with the vapors of the two materials 84a, 84b, within the outlet end portion of the vapor supply pipe 86, and a mixture of the vapors of the two materials 84a, 84b, negative electrode active substance 28 and carrier gas is blown from the outlet open end of the vapor supply pipe 86 onto one of the opposite surfaces of the aluminum foil strip 50 being moved in rolling contact with the outer circumferential surface of the main roller 42. Thus, the negative electrode active substance introducing device 102 is configured to introduce the negative electrode active substance 28 into the second vapor-deposited polymer film 30 which is formed on the above-indicated one surface of the aluminum foil strip 50, by blowing the vapors of the two materials 84a, 84b onto the surface of the aluminum foil strip 50, as described later.

The solid electrolyte layer forming unit 64 includes a third vapor-deposited polymer film forming device (third vapor-deposited polymer film forming means) 104, and a lithium-ion conductivity rendering substance introducing device (lithium-ion conductivity rendering substance introducing means) 106. The third vapor-deposited polymer film forming device 104 is configured to form the third vapor-deposited polymer film 32 by the vacuum vapor-deposition process, and has a first vapor source 108, a second vapor source 110 and a third vapor source 112. These first, second and third vapor sources 108, 110, 112 have respective material reservoirs 114a, 114b, 114c and respective heaters 116a, 116b, 116c.

The material reservoirs 114a, 114b, 114c of the first, second and third vapor sources 108, 110, 112 accommodate respective three materials 118a, 118b, 118c for forming the third vapor-deposited polymer film 32 which constitutes the solid electrolyte layer 16. In the present embodiment wherein the third vapor-deposited polymer film 32 is formed of polyurea having a repeating unit structure of polyethylene oxide, the material reservoirs 114a, 114b of the first and second vapor sources 108, 110 respectively accommodate ethylene glycol diamine such as diethylene glycol bis(3-aminopropyl) ether, as the material 118a in a liquid state, and aromatic diisocyanate such as m-xylylene diisocyanate, as the material 118b in a liquid state, which materials 118a, 118b are the material monomers for obtaining polyurea, while the material reservoir 114c of the third vapor source 112 accommodates oligo-ethylene oxide (low molecular polyethylene oxide having a molecular weight of 200-2000) in a liquid or solid state. These three materials 118a, 118b, 118c accommodated in the respective material reservoirs 114a, 114b, 114c of the first, second and third vapor sources 108, 110, 112 are heated and evaporated by the respective heaters 116a, 116b, 116c.

A vapor supply pipe 120 is provided to connect the material reservoirs 114a, 114b, 114c of the first, second and third vapor sources 108, 110, 112 to the vacuum chamber 36. This vapor supply pipe 120 is open at its outlet end within the vacuum chamber 36, toward the outer circumferential surface of the main roller 42, at a position downstream of the outlet open ends of the coaxially disposed vapor supply pipe 86 and powder supply pipe 96 of the positive electrode layer forming unit 60, and upstream of the outlet open ends of the coaxially disposed vapor supply pipe 86 and powder supply pipe 96 of the negative electrode layer forming unit 62, in the direction of feeding of the aluminum foil strip 50 by the main roller 42. The vapor supply pipe 120 is connected to the material reservoirs 114a, 114b, 114c through respective shut-off valves 122a, 122b, 122c.

In the third vapor-deposited polymer film forming device 104 constructed as described above, the three materials 118a, 118b, 118c accommodated in the respective material reservoirs 114a, 114b, 114c of the first, second and third vapor sources 108, 110, 112 are heated and evaporated by the respective heaters 116a, 116b, 116c, and the vapors of the three materials 118a, 118b, 118c are introduced into the vacuum chamber 36 through the vapor supply pipe 120 and the respective shut-off valves 122a, 122b, 122c placed in the open state, such that the vapors are blown onto the aluminum foil strip 50 being moved in rolling contact with the outer circumferential surface of the main roller 42.

The lithium-ion conductivity rendering substance introducing device 106 has a gas cylinder 124 provided with a shut-off valve 123, a powder reservoir 126, a gas supply pipe 128, a mass flow controller 129, a powder supply pipe 130, and a powder milling device 132. Thus, the lithium-ion conductivity rendering substance introducing device 106 is basically identical in construction with the positive electrode active substance introducing device 74 of the positive electrode layer forming unit 60, and the negative electrode active substance introducing device 102 of the negative electrode layer forming unit 62. The gas cylinder 124 of the lithium-ion conductivity rendering substance introducing device 106 is charged with a carrier gas (a third carrier gas) such as an inert gas, while the powder reservoir 126 accommodates a lithium salt [LiN(SO₂CF₃)₂ in this embodiment] as a lithium-ion conductivity rendering substance 134 in a powdered form. The outlet end portion of the powder supply pipe 130 of the lithium-ion conductivity rendering substance introducing device 106 is partially inserted within the outlet end portion of the vapor supply pipe 120 of the third vapor-deposited polymer film forming device 104, such that the outlet end portion of the powder supply pipe 130 located within the outlet end portion of the vapor supply pipe 120 is open toward the outer circumferential surface of the main roller 42, through the corresponding outlet end portion of the vapor supply pipe 120.

In the thus constructed lithium-ion conductivity rendering substance introducing device 106, the carrier gas supplied from the gas cylinder 124 is introduced into the powder reservoir 126 when the shut-off valve 123 is open, so that the lithium-ion conductivity rendering substance 134 accommodated within the powder reservoir 126 is dispersed by the carrier gas introduced into the powder reservoir 126, whereby the dispersed lithium-ion conductivity rendering substance 134 is supplied to the outlet end portion of the vapor supply pipe 120, together with the carrier gas. The lithium-ion conductivity rendering substance 134 is mixed with the vapors of the three materials 118a, 118b, 118c within the outlet end portion of the vapor supply pipe 120, and a mixture of the vapors of the three materials 118a, 118b, 118c, lithium-ion conductivity rendering substance 134 and carrier gas is blown from the outlet open end of the vapor supply pipe 120 onto one of the opposite surfaces of the aluminum foil strip 50 being moved in rolling contact with the outer circumferential surface of the main roller 42. Thus, the lithium-ion conductivity rendering substance introducing device 106 is configured to introduce the lithium-ion conductivity rendering substance 134 into the third vapor-deposited polymer film 32 which is formed on the above-indicated one surface of the aluminum foil strip 50, by blowing the vapors of the three materials 118a, 118b, 118c onto the surface of the aluminum foil strip 50, as described later.

Further, a first ultraviolet irradiating device 136, a second ultraviolet irradiating device 138 and an electron beam irradiating device 140 are disposed within the vacuum chamber 36. The first and second ultraviolet irradiating devices 136, 138 have the same known structure, and the electron beam irradiating device 140 has a known structure.

The first ultraviolet irradiating device 136 is disposed at a position between the outlet open ends of the vapor supply pipe 86 and the powder supply pipe 96 of the positive electrode layer forming unit 60, and the outlet open ends of the vapor supply pipe 120 and the powder supply pipe 130 of the solid electrolyte layer forming unit 64, so as to irradiate the outer circumferential surface of the main roller 42 with a ultraviolet radiation. On the other hand, the second ultraviolet irradiating device 138 is disposed at a position downstream of the outlet open ends of the vapor supply pipe 86 and the powder supply pipe 96 of the negative electrode layer forming unit 62, in the direction of feeding of the aluminum foil strip 50 by the main roller 42, so as to irradiate the outer circumferential surface of the main roller 42 with a ultraviolet radiation.

The first and second ultraviolet irradiating devices 136, 138 are configured to respectively irradiate with the ultraviolet radiation: the first vapor-deposited polymer film 26 which is formed by the positive electrode layer forming unit 60 on one of the opposite surfaces of the aluminum foil strip 50 being moved in rolling contact with the outer circumferential surface of the main roller 42, and which is constituted by polyurea containing the positive electrode active substance 24; and the second vapor-deposited polymer film 30 which is formed by the negative electrode layer forming unit 62, and which is constituted by polyurea containing the negative electrode active substance 28, as described later. Thus, the polyurea constituting the first and second vapor-deposited polymer films 26, 30 is transformed into polyaniline, whereby there are formed the first vapor-deposited polymer film 26 constituted by polyaniline containing the positive electrode active substance 24, and the second vapor-deposited polymer film 30 constituted by polyaniline containing the negative electrode active substance 28.

The electron beam irradiating device 140 is disposed at a position between the outlet open ends of the vapor supply pipe 120 and the powder supply pipe 130 of the solid electrolyte layer forming unit 64, and the outlet open ends of the vapor supply pipe 86 and the powder supply pipe 96 of the negative electrode layer forming unit 62, so as to irradiate the outer circumferential surface of the main roller 42 with an electron beam.

The electron beam irradiating device 140 is configured to irradiate, with the electron beam, the third vapor-deposited polymer film 32 containing the lithium-ion conductivity rendering substance 134, which is formed by the solid electrolyte layer forming unit 64 on one of the opposite surfaces of the aluminum foil strip 50 being moved in rolling contact with the outer circumferential surface of the main roller 42, as described later, so as to advantageously accelerate curing of the third vapor-deposited polymer film 32.

The desired lithium-ion secondary battery 10 is produced by using the thus constructed production apparatus 34, in the following manner.

Initially, the roll of the aluminum foil strip 50 is installed on the first supply roller 44, and the roll of the copper foil strip 52 is installed on the second supply roller 46. Then, the leading end portion of the aluminum foil strip 50 is extended from its roll and partially wound on the main roller 42. The aluminum foil strip 50 fed from the main roller 42 is superposed on the copper foil strip 52 extended from its roll, and the aluminum and copper foil strips 50, 52 superposed on each other are fixed at their leading ends to the take-up roller 48 so that the mutually superposed aluminum and copper foil strips 50, 52 are wound on the take-up roller 48. These steps are implemented as a preparatory operation for production of the lithium-ion secondary battery 10.

After the preparatory operation, the vacuum pump 40 is operated to evacuate the inside of the vacuum chamber 36 to a pressure of about 10⁻⁴-100Pa.

Subsequently, the main roller 42 and the take-up roller 48 are rotated to continuously feed the aluminum foil strip 50 from its roll toward the main roller 42, such that the aluminum foil strip 50 is moved in rolling contact with the outer circumferential surface of the main roller 42, and fed toward the take-up roller 48.

Upon initiation of the feeding movement of the aluminum foil strip 50 by the main roller 42, the mixture of the vapors of the two materials 84a, 84b generated in the first and second vapor sources 76, 78 of the first vapor-deposited polymer film forming device 72, and the positive electrode active substance 24 fed from the positive electrode active substance introducing device 74 into the vapor supply pipe 86 together with the carrier gas is blown from the outlet open end of the vapor supply pipe 86 onto the aluminum foil strip 50, at a predetermined circumferential position of the main roller 42. As a result, the two materials (material monomers) 84a, 84b are polymerized into the first vapor-deposited polymer film 26 constituted by polyurea as a precursor, on the positive electrode collector 20 constituted by the aluminum foil strip 50, while at the same time the positive electrode active substance 24 is introduced into the first vapor-deposited polymer film 26.

Then, when a portion of the aluminum foil strip 50, on which portion the first vapor-deposited polymer film 26 containing the positive electrode active substance 24 is formed, is moved to a position opposed to the ultraviolet irradiating device 136, the first vapor-deposited polymer film 26 is irradiated with the ultraviolet radiation by the ultraviolet irradiating device 136, whereby the polyurea constituting the first vapor-deposited polymer film 26 is transformed into polyaniline. Thus, the positive electrode layer 12 in the form of the first vapor-deposited polymer film 26 constituted by polyaniline containing the positive electrode active substance 24 is formed on the positive electrode collector 20 constituted by the aluminum foil strip 50.

Subsequently, when a portion of the aluminum foil strip 50, on which potion the positive electrode layer 12 is formed, is moved to a position opposed to the outlet open end of the vapor supply pipe 120 of the solid electrolyte layer forming unit 64, by rotation of the main roller 42 and the take-up roller 48, the mixture of the vapors of the three materials 118a, 118b, 118c generated in the first, second and third vapor sources 108, 110, 112, and the lithium-ion conductivity rendering substance 134 fed from the lithium-ion conductivity rendering substance introducing device 106 into the vapor supply pipe 120 together with the carrier gas is blown from the outlet open end of the vapor supply pipe 120 onto the positive electrode layer 12 formed on the aluminum foil strip 50 being moved in rolling contact with the outer circumferential surface of the main roller 42. As a result, the three materials (material monomers) 118a, 118b, 118c are polymerized into the third vapor-deposited polymer film 32 constituted by polyurea having a repeating unit structure of polyethylene oxide, on the positive electrode layer 12 formed on the aluminum foil strip 50, while at the same time the lithium-ion conductivity rendering substance 134 is introduced into the third vapor-deposited polymer film 32.

When a portion of the aluminum foil strip 50, on which potion the positive electrode layer 12 and the third vapor-deposited polymer film 32 containing the lithium-ion conductivity rendering substance 134 are formed, is moved to a position opposed to the electron beam irradiating device 140, by rotation of the main roller 42 and the take-up roller 48, the third vapor-deposited polymer film 32 is irradiated with the electron beam by the electron beam irradiating device 140, whereby curing of the third vapor-deposited polymer film 32 is accelerated. Thus, the solid electrolyte layer 16 in the form of the third vapor-deposited polymer film 32, which is constituted by polyurea having the repeating unit structure of polyethylene oxide, and containing the lithium-ion conductivity rendering substance 134 in the polyethylene oxide, namely, constituted by polyurea having lithium-ion conductivity, is formed on the positive electrode layer 12 laminated on the positive electrode collector 20 constituted by the aluminum foil strip 50.

When a portion of the aluminum foil strip 50, on which potion the positive electrode layer 12 and the solid electrolyte layer 16 are formed, is moved to a position opposed to the outlet open end of the vapor supply pipe 86 of the negative electrode layer forming unit 62, the mixture of the vapors of the two materials 84a, 84b generated in the first and second vapor sources 76, 78 of the second vapor-deposited polymer film forming device 100, and the negative electrode active substance 28 fed from the negative electrode active substance introducing device 102 into the vapor supply pipe 86 together with the carrier gas is blown from the outlet open end of the vapor supply pipe 86 onto the solid electrolyte layer 16 laminated on the positive electrode layer 12 laminated on the aluminum foil strip 50 being moved in rolling contact with the outer circumferential surface of the main roller 42. As a result, the two materials (material monomers) 84a, 84b are polymerized into the second vapor-deposited polymer film 30 constituted by polyurea as a precursor, on the solid electrolyte layer 16, while at the same time the negative electrode active substance 28 is introduced into the second vapor-deposited polymer film 30.

When a portion of the aluminum foil strip 50, on which portion the second vapor-deposited polymer film 30 containing the negative electrode active substance 28 is formed, is moved to a position opposed to the ultraviolet irradiating device 138, the second vapor-deposited polymer film 30 is irradiated with the ultraviolet radiation by the ultraviolet irradiating device 138, whereby the polyurea constituting the second vapor-deposited polymer film 30 is transformed into polyaniline. Thus, the negative electrode layer 14 in the form of the second vapor-deposited polymer film 30 constituted by polyaniline containing the negative electrode active substance 28 is formed on the solid electrolyte layer 16 laminated on the positive electrode layer 12 laminated on the positive electrode collector 20 constituted by the aluminum foil strip 50.

Then, when a portion of the aluminum foil strip 50, on which portion the positive electrode layer 12, the solid electrolyte layer 16 and the negative electrode layer 14 are laminated, is fed from the main roller 42 by rotation of the main roller 42 and the take-up roller 48, the copper foil strip 52 extending from the roll installed on the second supply roller 46 is laminated on the aluminum foil strip 50, such that the copper foil strip 52 is superposed on the negative electrode layer 14. Thus, the negative electrode collector 22 in the form of the copper foil strip 52 is laminated on the negative electrode layer 14. The above-described operation of forming the positive electrode layer 12, the solid electrolyte layer 16 and the negative electrode layer 14 on the aluminum foil strip 50, and the operation of superposing the copper foil strip 52 on the aluminum foil strip 50 on which the layers 12, 16, 14 are laminated, are continuously carried out until feeding of the aluminum foil strip 50 from the roll installed on the first supply roller 46 is terminated.

Thus, the lithium-ion secondary battery 10 consisting of the positive electrode collector 20, the positive electrode layer 12, the solid electrolyte layer 16, the negative electrode layer 14 and the negative electrode collector 22, which are laminated in this order of description, is produced in the form of an elongate tape. The tape of the lithium-ion secondary battery 10 is wound as a roll on the take-up roller 48. The thus produced lithium-ion secondary battery 10 is fed from the roll on the take-up roller 48, and is cut into pieces each of which is provided with terminals connected to the positive and negative electrode collectors 20, 22, as needed, and covered entirely with a suitable protective film, before each piece of the lithium-ion secondary battery 10 is used.

It will be understood from the foregoing description of the present embodiment that steps of forming the positive electrode layer 12, the solid electrolyte layer 16 and the negative electrode layer 14 are successively performed as a series of operations within the vacuum chamber 30, for continuously producing the desired lithium-ion secondary battery 10, so that the productivity of the lithium-ion secondary battery 10 can be significantly and effectively improved.

The present embodiment is further configured such that the positive and negative electrode layers 12, 14 and the solid electrolyte layer 16 are respectively constituted by the first, second and third vapor-deposited polymer films 26, 30, 32 which are formed of polyaniline or polyurea having an adequate degree of flexibility or plasticity, so that the lithium-ion secondary battery 10 as a whole can exhibit an adequate degree of flexibility or plasticity, and an accordingly high degree of bending or flexural strength. As a result, ease of handling of the lithium-ion secondary battery 10 can be advantageously improved, and freedom of choice of the place in which the lithium-ion secondary battery 10 is installed can be effectively increased.

The present embodiment is also configured such that the positive and negative electrode layers 12 and 14 and the solid electrolyte layer 16 are formed by the vapor-deposition polymerization process, so that each of the positive and negative electrode layers 12, 14 and the solid electrolyte layer 16 can be formed with a sufficiently small thickness with a high degree of uniformity, over the entire surface area of the positive electrode collector 20, even where the surface of the positive electrode collector 20 constituted by the aluminum foil strip 50 is not sufficiently flat with local recessed and raised portions being formed therein or thereon, for instance. Therefore, irrespective of the configuration of the surface of the positive electrode collector 20 (on which the positive electrode layer 12 is formed), the lithium-ion secondary battery 10 can be surely and stably produced so as to exhibit a stable cell performance, and to have an effectively reduced size, effectively improved output density and effectively improved freedom of choice of its shape.

Further, the vacuum vapor-deposition polymerization process employed to form the positive and negative electrode layers 12, 14 and the solid electrolyte layer 16 does not require the use of a device for drying the positive and negative electrode layers 12, 14 and the solid electrolyte layer 16 after these layers are formed, so that the production apparatus of the lithium-ion secondary battery 10 can be accordingly simplified and downsized, resulting in an advantageous reduction of the running cost of the production apparatus. Further, the required cycle time of production of the lithium-ion secondary battery 10 can be extremely effectively reduced owing to elimination of the drying step, and a sufficiently high rate of film formation by the vapor-deposition polymerization process, so that the desired lithium-ion secondary battery 10 can be efficiently produced at a sufficiently reduced cost according to the present embodiment.

As described above, the solid electrolyte layer 16 is formed of the "resin A" which has a repeating unit structure of polyethylene oxide, which contains a lithium salt 134 in polyethylene oxide, and which can be formed into a film by the vapor-deposition polymerization process, or the "resin B" which contains a lithium salt, a side chain of which is bonded to a sulfonic acid group, and which can be formed into a film by the vapor-deposition polymerization process. Therefore, the solid electrolyte layer 16 may be formed by using the production apparatus 34 in the following manner.

To form the solid electrolyte layer 16 constituted by the third vapor-deposited polymer film 32 of polyurea in the form of the resin A, for example, the material reservoirs 114a, 114b of the first and second vapor sources 108, 110 of the third vapor-deposited polymer film forming device 104 of the solid electrolyte layer forming unit 64 respectively accommodate ethylene glycol diamine such as diethylene glycol bis(3-aminopropyl) ether, as the material 118a, and aromatic diisocyanate such as m-xylylene diisocyanate, as the material 118b, at least one of these materials 118a, 118b has a side chain bonded to a repeating unit structure of polyethylene oxide. In this case, the third vapor source 112 is not used.

The vapors of the materials 118a, 118b generated in the first and second vapor sources 108, 110 are polymerized on the positive electrode layer 12 formed on the aluminum foil strip 50 being moved in rolling contact with the outer circumferential surface of the main roller 42 within the vacuum chamber 36, to form the third vapor-deposited polymer film 32, while at the same time the powdered lithium-ion conductivity rendering substance 134 consisting of a lithium salt is introduced into the third vapor-deposited polymer film 32 by the lithium-ion conductivity rendering substance introducing device 106. Thus, there is formed the solid electrolyte layer 16 constituted by the third vapor-deposited polymer film 32 having the repeating unit structure of polyethylene oxide and containing the lithium salt in polyethylene oxide.

To form the solid electrolyte layer 16 constituted by the third vapor-deposited polymer film 32 of polyurea in the form of the resin B, for example, the material reservoirs 114a, 114b of the first and second vapor sources 108, 110 respectively accommodate ethylene glycol diamine such as diethylene glycol bis(3-aminopropyl) ether, as the material 118a, and aromatic diisocyanate such as m-xylylene diisocyanate, as the material 118b, at least one of these materials 118a, 118b has a side chain bonded to a sulfonic acid group. In this case, too, the third vapor source 112 is not used.

The vapors of the materials 118a, 118b generated in the first and second vapor sources 108, 110 are polymerized on the positive electrode layer 12 formed on the aluminum foil strip 50 being moved in rolling contact with the outer circumferential surface of the main roller 42 within the vacuum chamber 36, to form the third vapor-deposited polymer film 32, while at the same time the powdered lithium-ion conductivity rendering substance 134 consisting of a lithium salt is introduced into the third vapor-deposited polymer film 32 by the lithium-ion conductivity rendering substance introducing device 106. Thus, there is formed the solid electrolyte layer 16 constituted by the third vapor-deposited polymer film 32 containing the lithium salt and having a side chain bonded to a sulfonic acid group.

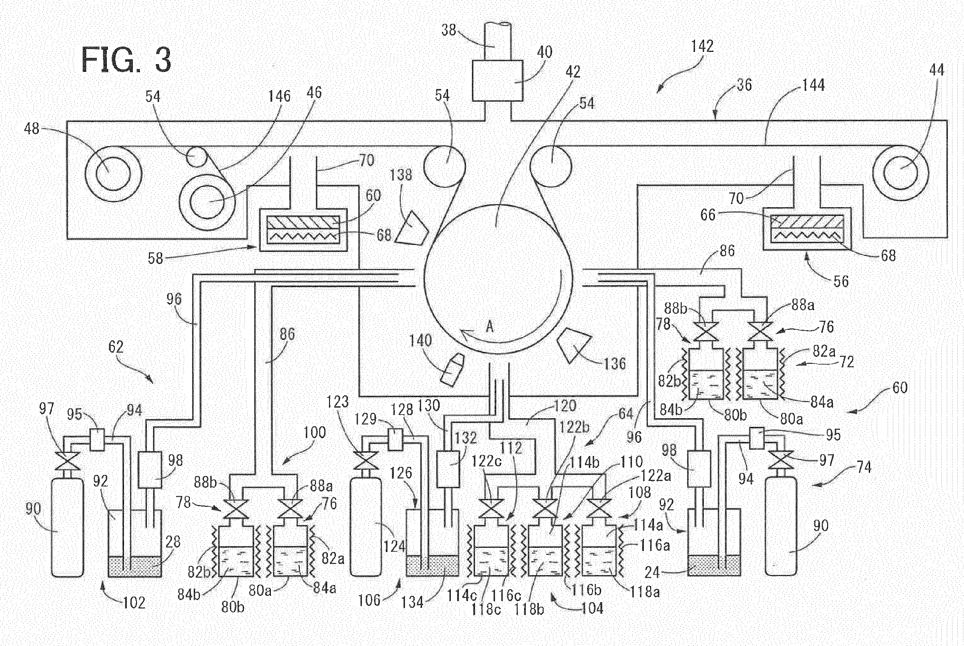

By the way, in the above-described first embodiment, the positive electrode collector 20 is constituted by the aluminum foil strip 50 while the negative electrode collector 22 is constituted by the copper foil strip 52. However, the positive electrode collector 20 and the negative electrode collector 22 may be constituted by vapor-deposited films. The lithium-ion secondary battery 10 having the positive and negative electrode collectors 20, 22 constituted by the vapor-deposited films can be produced by using a production apparatus 142 constructed as shown in Fig. 3, for example, in the following manner. It is noted that the reference signs used in Figs. 1 and 2 to denote the members and portions in the first embodiment are used in Fig. 3 and Figs. 4-8 showing embodiments which will be described later, to denote the corresponding members and portions, which will not be described redundantly.

Namely, in the production apparatus 142 of this embodiment, the main roller 42, the first and second supply rollers 44, 46 and the take-up roller 48 are disposed within the vacuum chamber 36, as shown in Fig. 3. Further, a positive electrode collector forming unit 56 and a negative electrode collector forming unit 58 are disposed outside the vacuum chamber 36, as well as the positive electrode layer forming unit 60, the negative electrode layer forming unit 62 and the solid electrolyte layer forming unit 64.

The positive and negative electrode collector forming units 56, 58 have the same known basic structure configured to form a vapor-deposited film by a vacuum vapor-deposition process, and each having a heater 68 for heating and evaporating a suitable metallic vapor-deposition material 66, and a nozzle 70 through which the vapor of the evaporated metallic vapor-deposition material 66 is blown outside. In this embodiment, the vapor-deposition material 66 accommodated in the positive electrode collector forming unit 56 is aluminum or an aluminum alloy (hereinafter simply referred to as "aluminum"), while the vapor-deposition material 66 accommodated in the negative electrode collector forming unit 58 is copper or a copper alloy (hereinafter simply referred to as "copper").

In the production apparatus 142, a roll of a positive-electrode-side protective film 144, which serves as a substrate, and on which the positive electrode layer 12 of the desired lithium-ion secondary battery 10 is laminated, is installed on the first supply roller 44, while a roll of a negative-electrode-side protective film 146 which is superposed on the negative electrode layer 12 of the lithium-ion secondary battery 10 is installed on the second supply roller 46. The positive-electrode-side protective film 144 supplied from the first supply roller 44 is partially wound on the main roller 42, and fed from the main roller 42 toward the take-up roller 48, so as to be wound on the take-up roller 48. On the other hand, the negative-electrode-side protective film 146 supplied from the second supply roller 46 is superposed on one of opposite surfaces of the positive-electrode-side protective film 144 fed from the main roller 42, before the positive-electrode-side protective film 144 is wound on the take-up roller 48.

Thus, upon rotation of the main roller 42 and the take-up roller 48, the positive-electrode-side protective film 144 extending from the roll installed on the first supply roller 44 is moved in rolling contact with the outer circumferential surface of the main roller 42, and fed from the main roller 42 toward the take-up roller 48. Before the positive-electrode-side protective film 144 is wound on the take-up roller 48, the negative-electrode-side protective film 146 is superposed on the positive-electrode-side protective film 144, such that the positive-electrode-side protective film 144 and the negative-electrode-side protective film 146 which are superposed on each other is wound on the take-up roller 48.

The positive-electrode-side and negative-electrode-side protective films 144, 146 used in this embodiment are conventional protective films commonly used for the lithium-ion secondary battery. For instance, each of these protective films 144, 146 is a film having a laminar structure consisting of a polyester resin layer, a polyamide resin layer, an aluminum layer and a polypropylene resin layer which are superposed on each other and bonded together with bonding layers consisting of low-molecular-weight polyethylene, for example.

The positive electrode collector forming unit 56 is disposed such that its nozzle 70 is open toward one of the opposite surfaces of the positive-electrode-side protective film 144 supplied from the first supply roller 44, at a position between the first supply roller 44 and the main roller 42. On the other hand, the negative electrode collector forming unit 58 is disposed such that its nozzle 70 is open toward the above-indicated one surface of the positive-electrode-side protective film 144 (the surface to which the nozzle 70 of the positive electrode collector forming unit 56 is open) fed from the main roller 42, at a position downstream of a position where the negative-electrode-side protective film 146 is superposed on the positive-electrode-side protective film 144.

In the arrangement described above, the positive electrode collector forming unit 56 is configured to blow the vapor of aluminum onto the above-indicated one surface of the positive-electrode-side protective film 144, at a position downstream of the main roller 42, while the negative electrode collector forming unit 58 is configured to blow the vapor of copper onto the above-indicated one surface of the positive-electrode-side protective film 144 (the surface onto which the vapor of aluminum is blown), before the negative-electrode-side protective film 146 is superposed on the positive-electrode-side protective film 144.

The desired lithium-ion secondary battery 10 is produced by using the thus constructed production apparatus 142, in the following manner.

Initially, the preparatory operation for production of the lithium-ion secondary battery 10 is carried out, and the vacuum chamber 36 is evacuated by an operation of the vacuum pump 40. At this time, the pressure within the vacuum chamber 36 is adjusted to the level as described above with respect to the first embodiment.

The preparatory operation for the production of the lithium-ion secondary battery 10 is carried out by the following steps. The rolls of the positive-electrode-side and negative-electrode-side protective films 144, 146 are respectively installed on the first supply roller 44 and the second supply roller 46. Then, the leading end portion of the positive-electrode-side protective film 144 is extended from its roll and partially wound on the main roller 42. The positive-electrode-side protective film 144 fed from the main roller 42 is superposed on the negative-electrode-side protective film 146 extending from the roll installed on the second supply roller 46, and the positive-electrode-side and negative-electrode-side protective films 144, 146 superposed on each other are fixed at their leading ends to the take-up roller 48 so that the mutually superposed positive-electrode-side and negative-electrode-side protective films 144, 146 are wound on the take-up roller 48.

Subsequently, the main roller 42 and the take-up roller 48 are rotated to continuously feed the positive-electrode-side protective film 144 from its roll toward the main roller 42, such that the positive-electrode-side protective film 144 is moved in rolling contact with the outer circumferential surface of the main roller 42 in one direction (indicated by an arrow A shown in Fig. 3), and fed toward the take-up roller 48.

When the feeding movement of the positive-electrode-side protective film 144 by the main roller 42 is initiated, the vapor of aluminum is blown from the nozzle 70 of the positive electrode collector forming unit 56 into the vacuum chamber 36, so that the vapor is blown onto one of the opposite surfaces of a portion of the positive-electrode-side protective film 144 which portion is opposed to the outlet open end of the nozzle 70. (The above-indicated one surface of the positive-electrode-side protective film 144 is opposite to the surface which comes into contact with the outer circumferential surface of the main roller 42.) Thus, the positive electrode collector 20 constituted by a vapor-deposited aluminum film is formed on the positive-electrode-side protective film 144.

Then, while the positive-electrode-side protective film 144 is moved in rolling contact with the outer circumferential surface of the main roller 42 by rotation of the main roller 42 and the take-up roller 48, the positive electrode layer 12, the solid electrolyte layer 16 and the negative electrode layer 14 are formed on the positive electrode collector 20 formed on the above-indicated portion of the positive-electrode-side protective film 144, by the positive electrode layer forming unit 60, the solid electrolyte layer forming unit 64 and the negative electrode layer forming unit 62, as in the case of the above-described first embodiment, such that the positive electrode layer 12, the solid electrolyte layer 16 and the negative electrode layer 14 are laminated in this order of description on the positive electrode collector 20.

Subsequently, when the above-indicated portion of the positive-electrode-side protective film 144, on which portion the positive electrode collector 20, the positive electrode layer 12, the solid electrolyte layer 16 and the negative electrode layer 14 are laminated, is fed from the main roller 42 and moved to a position opposed to the outlet open end of the nozzle 70 of the negative electrode collector forming unit 58, by rotation of the main roller 42 and the take-up roller 48, the vapor of copper is blown from the nozzle 70 into the vacuum chamber 36, so that the vapor is blown onto the negative electrode layer 14 formed on the above-indicated portion of the positive-electrode-side protective film 144. Thus, the negative electrode collector 22 constituted by a vapor-deposited copper film is formed on the negative electrode layer 14, such that the positive electrode collector 20, the positive electrode layer 12, the solid electrolyte layer 16, the negative electrode layer 14 and the negative electrode collector 22 are laminated in this order of description on the above-indicated one surface of the positive-electrode-side protective film 144.

Then, after the positive electrode collector 20, the positive electrode layer 12, the solid electrolyte layer 16, the negative electrode layer 14 and the negative electrode collector 22 are laminated on the positive-electrode-side protective film 144, the negative-electrode-side protective film 146 extending from the roll installed on the second supply roller 46 is superposed on the negative electrode collector 22. The above-described operation of forming the positive electrode collector 20, the positive electrode layer 12, the solid electrolyte layer 16, the negative electrode layer 14 and the negative electrode collector 22 on the positive-electrode-side protective film 144, and the operation of superposing the negative-electrode-side protective film 146 on the negative electrode collector 22, are continuously carried out until feeding of the positive-electrode-side protective film 144 from the roll installed on the first supply roller 44 is terminated.

Thus, the lithium-ion secondary battery 10 is produced in the form of an elongate tape, such that the lithium-ion secondary battery 10 has a laminar body consisting of the positive electrode collector 20, the positive electrode layer 12, the solid electrolyte layer 16, the negative electrode layer 14 and the negative electrode collector 22 which are laminated on each other in this order of description, and such that the laminar body is covered with and interposed between the positive-electrode-side protective film 144 and the negative-electrode-side protective film 146. The tape of the lithium-ion secondary battery 10 is wound as a roll on the take-up roller 48. The thus produced lithium-ion secondary battery 10 is fed from the roll on the take-up roller 48, and cut into pieces each of which is provided with terminals connected to the positive and negative electrode collectors 20 and 22, as needed, while portions of the positive-electrode-side protective film 144 and the negative-electrode-side protective film 146 which are superposed on each other are bonded together by a thermal bonding process, before each piece of the lithium-ion secondary battery 10 is used.

It will be understood from the foregoing description that the present embodiment, in which the positive electrode layer 12, the solid electrolyte layer 16 and the negative electrode layer 14 are formed by the vacuum vapor-deposition polymerization process, has substantially the same operational and physical advantages as described above with respect to the first embodiment.

In particular, the present embodiment is advantageous in that the positive and negative electrode collectors 20, 22 are constituted by the vapor-deposited films formed by the vacuum vapor-deposition process. Accordingly, the thicknesses of the positive and negative electrode collectors 20, 22 can be easily adjusted as needed, by adjusting the pressure of the vapors of aluminum and copper generated in the positive and negative electrode collector forming units 56, 58, contrary to the thicknesses of the positive and negative electrode collectors 20, 22 formed of the metallic foils.

The present embodiment is further advantageous in that the steps of forming the positive electrode collector 20, the positive electrode layer 12, the solid electrolyte layer 16, the negative electrode layer 14 and the negative electrode collector 22 on the positive-electrode-side protective film 144 are successively performed as a series of operations so as to produce a laminar body, and the step of superposing the negative-electrode-side protective film 146 on the laminar body is easily carried out within the vacuum chamber 36, so that the lithium-ion secondary battery 10 covered with the positive-electrode-side and negative-electrode-side protective films 144 and 146 can be easily produced with a higher degree of productivity.

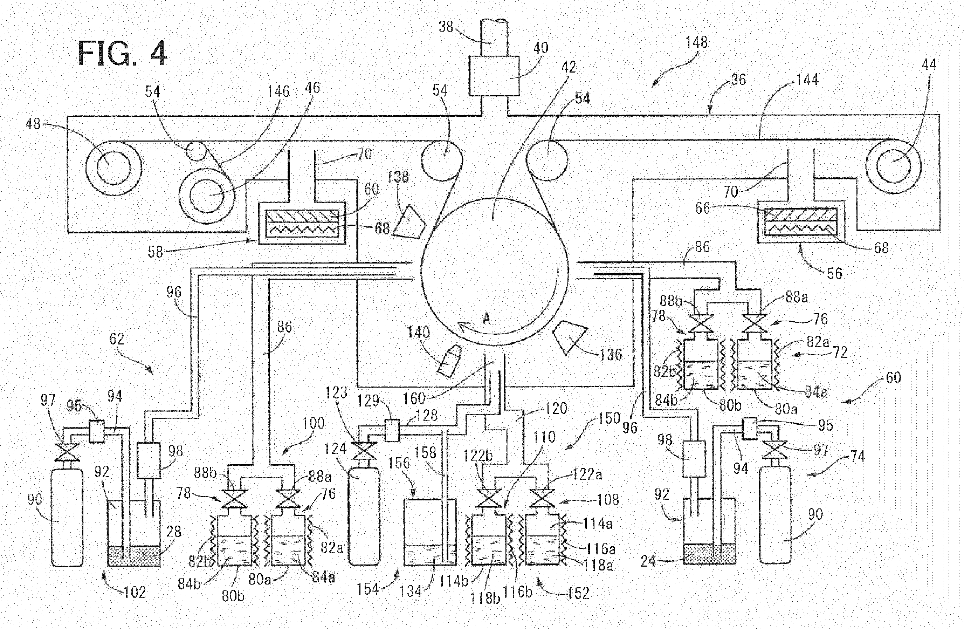

By the way, in the above-described first and second embodiments, the lithium salt in a powdered form is used as the lithium-ion conductivity rendering substance 134, and the solid electrolyte layer 16 is constituted by the third vapor-deposited polymer film 32 containing the lithium-ion secondary battery 134 in the form of the lithium salt in a powdered form. However, the kind of the lithium-ion conductivity rendering substance 134 is not particularly limited, provided that this substance 134 can literally render lithium-ion conductivity to the third vapor-deposited polymer film 32, when the substance 134 is contained in the third vapor-deposited polymer film 32. Hence, it is possible to use, as the lithium-ion conductivity rendering substance 134, an ion-conductive polymer in which a lithium salt is dissolved. Where this ion-conductive polymer in which a lithium salt is dissolved is used as the lithium-ion conductivity rendering substance 134, the desired lithium-ion secondary battery 10 can be produced by using a production apparatus 148 constructed as shown in Fig. 4, for example.

As shown in Fig. 4, the production apparatus 148 has a solid electrolyte layer forming unit 150 including a third vapor-deposited polymer film forming device 152 and a lithium-ion conductivity rendering substance introducing device 154 which are partially different in construction from those of the production apparatuses 34, 142 of the above-described first and second embodiments. The production apparatus 148 is identical in construction with the production apparatus 142 of the second embodiment, except in the construction of the solid electrolyte layer forming unit 150.

Namely, the solid electrolyte layer forming unit 150 of the production apparatus 148 has the third vapor-deposited polymer film forming device 152 which is provided with the first and second vapor sources 108, 110, but is not provided with the third vapor source (112). The material reservoirs 114a, 114b of the first and second vapor sources 108, 110 respectively accommodate ethylene glycol diamine such as diethylene glycol bis(3-aminopropyl) ether, as the material 118a in a liquid state, and aromatic diisocyanate such as m-xylylene diisocyanate, as the material 118b in a liquid state, for example, which materials 118a, 118b are the material monomers for the third vapor-deposited polymer film 32 constituted by polyurea.

In the third vapor-deposited polymer film forming device 152 constructed as described above, the two materials 118a, 118b accommodated in the respective material reservoirs 114a, 114b of the first and second vapor sources 108, 110 are heated and evaporated by the respective heaters 116a, 116b, and the vapors of the two materials 118a, 118b are introduced into the vacuum chamber 36 through the vapor supply pipe 120 and the respective shut-off valves 122a, 122b placed in the open state, such that the vapors are blown onto the positive electrode layer 12 formed on the positive electrode collector 20 formed on the positive-electrode-side protective film 144 being moved in rolling contact with the outer circumferential surface of the main roller 42.

The lithium-ion conductivity rendering substance introducing device 154 includes a gas cylinder 124 provided with a shut-off valve 123, a gas supply pipe 128, a mass flow controller 129, a liquid reservoir 156 and a liquid supply pipe 158. The liquid reservoir 156 of the lithium-ion conductivity rendering substance introducing device 154 accommodates the lithium-ion conductivity rendering substance 134 consisting of an ion-conductive polymer in which a lithium salt is dissolved, and which is in a liquid state at the ambient temperature. In this embodiment, oligo-ethylene oxide in which a lithium salt [LiN(SO₂CF₃)₂, for example] is dissolved and which has a low molecular weight of about not more than 600 is used as the lithium-ion conductivity rendering substance 134.

The outlet end portion of the liquid supply pipe 158 is inserted into the gas supply pipe 128, whose outlet end portion is inserted into and located within the outlet end portion of the third vapor-deposited polymer film forming device 152, so that the outlet end portion of the gas supply pipe 128 is open toward the outer circumferential surface of the main roller 42, through the outlet end portion of the vapor supply pipe 120.

In the thus constructed lithium-ion conductivity rendering substance introducing device 154, a carrier gas is fed from the gas cylinder 124 through the gas supply pipe 128, in the open state of the shut-off valve 123, while the lithium-ion conductivity rendering substance 134 in the liquid state accommodated in the liquid reservoir 156 is sucked into the gas supply pipe 128 through the liquid supply pipe 158, under a reduced pressure generated within the gas supply pipe 128. Further, micro particles of the liquid lithium-ion conductivity rendering substance 134 are dispersed in a mist state in the carrier gas within the gas supply pipe 128, and are fed into the outlet end portion of the vapor supply pipe 120, together with the carrier gas. The micro particles of the lithium-ion conductivity rendering substance 134 in the mist state are mixed with the vapors of the two materials 118a, 118b in the outlet end portion of the vapor supply pipe 120, and a mixture of the particles of the substance 134, vapors of the two materials 118a, 118b and carrier gas is blown from the outlet open end of the vapor supply pipe 120 onto the positive electrode layer 12 formed on the positive-electrode-side protective film 144 being moved in rolling contact with the outer circumferential surface of the main roller 42. Thus, the lithium-ion conductivity rendering substance introducing device 134 is configured to introduce the lithium-ion conductivity rendering substance 134 into the third vapor-deposited polymer film 32 which is formed on one of the opposite surfaces of the positive-electrode-side protective film 144, by blowing the vapors of the two materials 118a, 118b onto the above-indicated surface of the positive-electrode-side protective film 144, as described later.

The desired lithium-ion secondary battery 10 is produced by using the thus constructed production apparatus 148, in the following manner.

Initially, the preparatory operation for production of the lithium-ion secondary battery 10, the step of forming the positive electrode layer 12 on one of the opposite surfaces of the positive-electrode-side protective film 144 serving as the substrate being moved in rolling contact with the outer circumferential surface of the main roller 42, and any other intervening steps are performed in the same manner as the production of the lithium-ion secondary battery 10 by using the production apparatus 142 of the second embodiment.

Then, while the positive-electrode-side protective film 144 is moved in rolling contact with the outer circumferential surface of the main roller 42 in one direction (indicated by an arrow A in Fig. 4), by rotation of the main roller 42 and the take-up roller 48, when a portion of the positive-electrode-side protective film 144, on which portion the positive electrode layer 12 is formed, is moved to a position opposed to the outlet open end of the vapor supply pipe 120 of the solid electrode layer forming unit 150, the mixture of the vapors of the two materials 118a, 118b generated in the first and second vapor sources 108, 110, and the lithium-ion conductivity rendering substance 134 blown from the lithium-ion conductivity rendering substance introducing device 154 into the vapor supply pipe 120 together with the carrier gas is blown from the outlet open end of the vapor supply pipe 120 onto the positive electrode layer 12 formed on the positive-electrode-side protective film 144 being moved in rolling contact with the outer circumferential surface of the main roller 42, so as to polymerize the two materials (material monomers) 118a, 118b on the positive electrode layer 12, for thereby forming the second vapor-deposited polymer film 30 constituted by polyurea, while at the same time the lithium-ion conductivity rendering substance 134 is introduced into the second vapor-deposited polymer film 30.

When a portion of the positive-electrode-side protective film 144, on which potion the positive electrode layer 12 and the third vapor-deposited polymer film 32 containing the lithium-ion conductivity rendering substance 134 are formed, is moved to a position opposed to the electron beam irradiating device 140, by rotation of the main roller 42 and the take-up roller 48, the third vapor-deposited polymer film 32 is irradiated with the electron beam by the electron beam irradiating device 140, so that curing of the third vapor-deposited polymer film 32 is accelerated. Thus, the solid electrolyte layer 16 in the form of the third vapor-deposited polymer film 32, which is constituted by polyurea having a repeating unit structure of polyethylene oxide and containing the lithium salt in the polyethylene oxide, namely, constituted by polyurea having lithium-ion conductivity is formed on the positive electrode layer 12 laminated on the positive electrode collector 20 laminated on the surface of the positive-electrode-side protective film 144.

Then, after the negative electrode layer 14 and the negative electrode collector 22 are formed on the solid electrolyte layer 16 formed on the one of the opposite surfaces of the positive-electrode-side protective film 144, as in the production of the lithium-ion secondary battery 10 by using the production apparatus 142 of the above-described second embodiment, the negative-electrode-side protective film 146 is superposed on the positive-electrode-side protective film 144, whereby the desired lithium-ion secondary battery 10 is produced in the form of a tape, and the tape of the lithium-ion secondary battery 10 is wound in the form of a roll.

It will be understood from the foregoing description of the present embodiment that the positive electrode layer 12, the solid electrolyte layer 16 and the negative electrode layer 14 are formed by the vacuum vapor-deposition polymerization process. Accordingly, the present embodiment has substantially the same operational and physical advantages as described above with respect to the first and second embodiments.

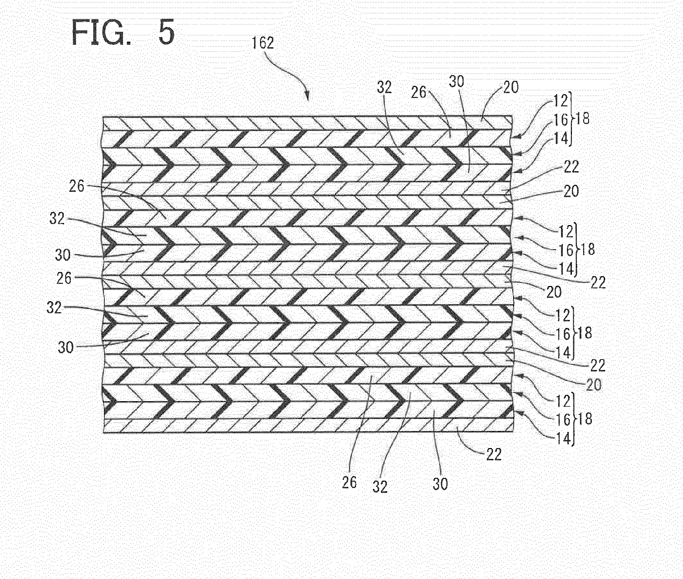

By the way, the lithium-ion secondary battery 10 of the above-described first, second and third embodiments has the single laminar body 18 wherein the positive and negative electrode layers 12, 14 are laminated on the respective opposite surfaces of the solid electrolyte layer 16. However, according to the method of the invention, it is possible to advantageously produce a lithium-ion secondary battery 162 wherein a plurality of the laminar bodies 18 are laminated on each other, as shown in Fig.5.

As shown in Fig. 5, the lithium-ion secondary battery 162 is constituted by the plurality of the laminar bodies 18 (four laminar bodies 18 in this embodiment) which are laminated on each other in series in the vertical direction. In the lithium-ion secondary battery 162, the positive electrode collector 20 of one of the two adjacent laminar bodies 18 is in contact with the negative electrode collector 22 of the other of the adjacent laminar bodies 18. This lithium-ion secondary battery 162 can be efficiently produced with a reduced size and compact construction, and can be used for higher-voltage applications.

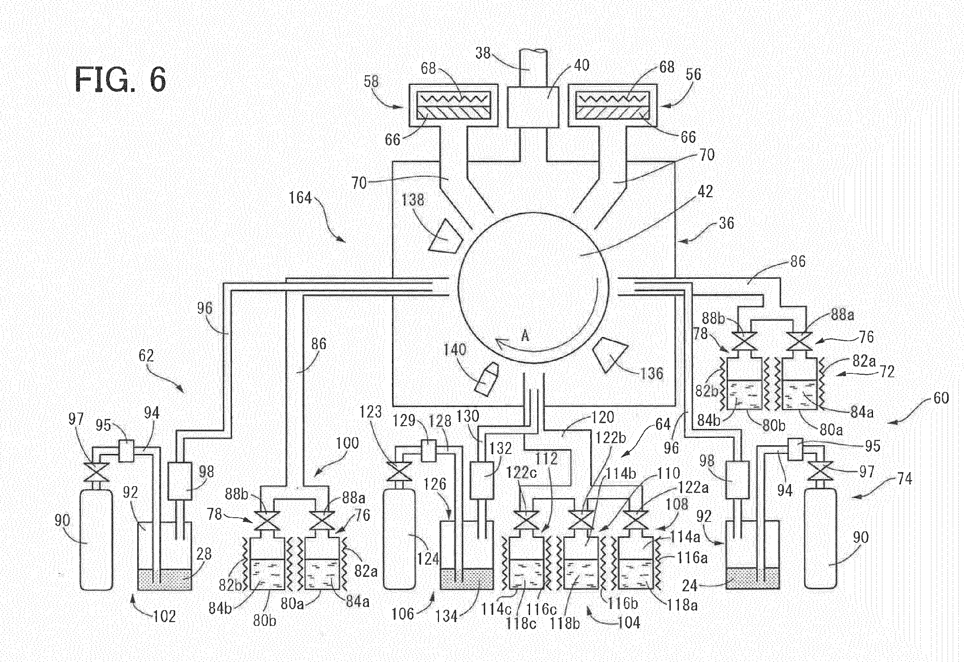

The desired lithium-ion secondary battery 162 is produced by using a production apparatus 164 constructed as shown in Fig. 6, for example. The production apparatus 164 is partially different in construction from the production apparatus 142 of the above-described second embodiment shown in Fig. 3.

Namely, as shown in Fig. 6, in the production apparatus 164 of this embodiment, the main roller 42, the two ultraviolet irradiating devices 136, 138, and the electron beam irradiating device 140 are disposed within the vacuum chamber 36, while the positive electrode layer forming unit 60, the negative electrode layer forming unit 62 and the solid electrolyte layer forming unit 64 are disposed outside the vacuum chamber 36, such that the vapor supply pipes 86, 86, 120 and the powder supply pipes 96, 96, 130 are open toward the outer circumferential surface of the main roller 42, as in the production apparatus 142 of the above-described second embodiment.

On the other hand, the production apparatus 164 is not provided with the first and second supply rollers (44, 46) and the take-up roller (48), which are provided within the vacuum chamber 36 in the production apparatus 142 of the above-described second embodiment. Further, the positive electrode collector forming unit 56 and the negative electrode collector forming unit 58 are disposed outside the vacuum chamber 36, such that their nozzles 70, 70 are open toward the outer circumferential surface of the main roller 42. Around the circumference of the main roller 42, the outlet open end of the nozzle 70 of the positive electrode collector forming unit 56 is positioned on one side of the vapor supply pipe 86 of the positive electrode layer forming unit 60, which side is remote from the vapor supply pipe 120 of the solid electrolyte layer forming unit 64. Further, the outlet open end of the nozzle 70 of the negative electrode collector forming unit 58 is positioned on one side of the ultraviolet irradiating device 138, which side is remote from the vapor supply pipe 86 of the negative electrode layer forming unit 62.

The desired lithium-ion secondary battery 162 is produced by using the thus constructed production apparatus 164, in the following manner, for example.

Initially, the inside of the vacuum chamber 36 is evacuated to a predetermined pressure, and then, the main roller 42 whose outer circumferential surface is cooled is rotated in one direction (indicated by an arrow A in Fig. 6).

While the main roller 42 is rotated, the positive electrode collector 20 is formed, as a substrate in the form of a vapor-deposited aluminum film, for example, directly on the outer circumferential surface of the main roller 42, by the positive electrode collector forming unit 56. The positive electrode collector 20 is continuously formed on the outer circumferential surface of the main roller 42, by continuously carrying out the step of forming the positive electrode collector 20. The positive electrode collector 20 formed on the outer circumferential surface of the main roller 42 is moved in the circumferential direction of the main roller 42 by rotation of the main roller 42.

While the positive electrode collector 20 is moved in the circumferential direction of the main roller 42 by rotation of the main roller 42, the positive electrode layer 12 is formed on the positive electrode collector 20, by the positive electrode layer forming unit 60 and the ultraviolet irradiating device 136, and the solid electrolyte layer 16 is formed on the thus formed positive electrode layer 12, by the solid electrolyte layer forming unit 64 and the electron beam irradiating device 140, while the negative electrode layer 14 is formed on the thus formed solid electrolyte layer 16, by the negative electrode layer forming unit 62 and the ultraviolet irradiating device 138. Further, the negative electrode collector 22 constituted by a vapor-deposited copper film, for example, is formed on the negative electrode layer 14, by the negative electrode collector forming unit 58. These steps of forming the positive electrode layer 12, the solid electrolyte layer 16, the negative electrode layer 14 and the negative electrode collector 22 are also continuously carried out while the main roller 42 is rotated.

Thus, during one rotation of the main roller 42, the positive electrode layer 12, the solid electrolyte layer 16, the negative electrode layer 14 and the negative electrode collector 22 are laminated in this order of description on the positive electrode collector 20 directly formed on the outer circumferential surface of the main roller 42. The steps of forming the positive electrode collector 20, the positive electrode layer 12, the solid electrolyte layer 16, the negative electrode layer 14 and the negative electrode collector 22 are continuously carried out during further rotations of the main roller 42.

Thus, there is obtained a roll of a laminar structure the radially innermost layer of which is constituted by the positive electrode collector 20, while the radially outermost layer of which is constituted by the negative electrode collector 22, and which includes a plurality of the laminar bodies 18 each of which consists of the positive electrode layer 12, the solid electrolyte layer 16 and the negative electrode layer 14 and which are laminated on each other, such that the negative electrode collector 22 of one of the two adjacent laminar bodies 18 is in contact with the positive electrode collector 20 of the other of the adjacent laminar bodies 18. The thus obtained laminar structure is fed from its roll, and is cut into pieces, whereby the lithium-ion secondary battery 162 as shown in Fig. 5 is obtained. Before the lithium-ion secondary battery 162 is used, terminals are connected to the positive and negative electrode collectors 20, 22 respectively located at the uppermost and lowermost layers of the lithium-ion secondary battery 162, as needed. Further, the lithium-ion secondary battery 162 is entirely covered with a suitable protective film, or protective films are laminated on the lower surface of the negative electrode collector 22 located at the lowermost layer and the upper surface of the positive electrode collector 20 located at the uppermost layer.

According to this embodiment, it is possible to advantageously and efficiently produce the lithium-ion secondary battery 162 which has a reduced size and compact construction, and which can be used for higher-voltage applications, with a high degree of productivity.

In the above-described embodiment, the positive electrode collector 20 constituted by the vapor-deposited aluminum film is directly formed on the outer circumferential surface of the main roller 42. However, a protective film layer constituted by a vapor-deposited polymer film which is electrically insulative and which prevents vapor penetration may be directly formed on the outer circumferential surface of the main roller 42.

In such a case, a protective film layer forming unit, which is not shown in the drawing, and which is configured to form the protective film layer in the form of the vapor-deposited polymer film by the vacuum vapor-deposition polymerization process, is disposed at a position upstream of the positive electrode collector forming unit 56, as seen in the direction of feeding of the positive electrode collector 20 by the main roller 42, so that the positive electrode collector 20 is formed on the protective film layer after the protective film layer in the form of the vapor-deposited polymer film is formed on the outer circumferential surface of the main roller 42.

Where the protective film layer is formed at the lowermost layer of the lithium-ion secondary battery 162 shown in Fig. 5, another protective film layer is generally formed at the uppermost layer of the lithium-ion secondary battery 162. To form this another protective film layer, a vapor-deposited polymer film is formed on the negative electrode collector 22, by the protective film layer forming unit, after the desired lithium-ion secondary battery 162 is produced.

By the way, in the lithium-ion secondary battery disclosed in the above-described Japanese Patent No. 3852169, the positive electrode layer, the negative electrode layer and the solid electrolyte layer are all constituted by the coating films. Further, in the lithium-ion secondary battery disclosed in JP-A-2010-251075, the positive electrode layer and the solid electrolyte layer are constituted by the sputtering films while the negative electrode layer is constituted by the vapor-deposited film. Accordingly, in the above-described conventional lithium-ion secondary batteries, there exist distinct boundary interfaces between the positive electrode layer and the solid electrolyte layer, and between the negative electrode layer and the solid electrolyte layer. The presence of the distinct boundary interfaces between the layers may result in an increase of the interface resistance and reduction of the output density of the lithium-ion secondary battery.

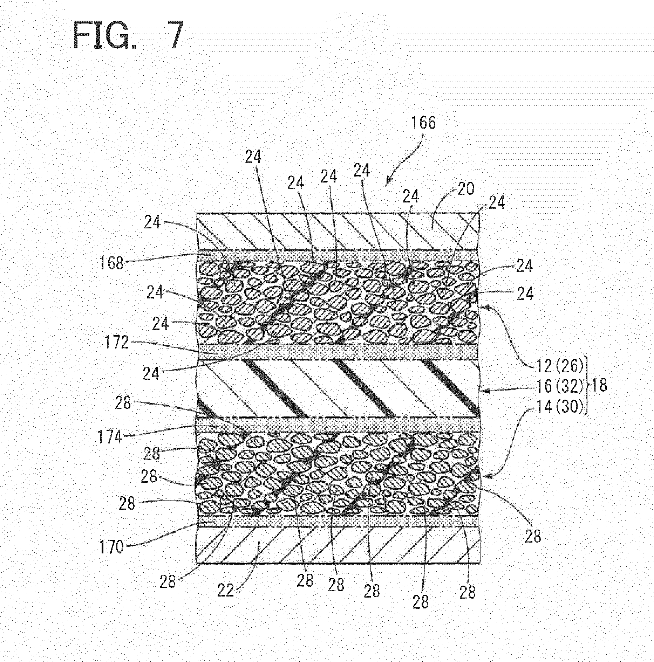

Fig. 7 shows a lithium-ion secondary battery 166 which is configured to restrict the above-described reduction of the output density and which can be advantageously produced according to the invention.

Specifically described, in the lithium-ion secondary battery 166 shown in Fig. 7, a first mixture layer 172 is formed between the positive electrode layer 12 and the solid electrolyte layer 16, while a second mixture layer 174 is formed between the negative electrode layer 14 and the solid electrolyte layer 16. In this embodiment, the positive electrode layer 12 is constituted by the first vapor-deposited polymer film 26 formed of polyurethane containing the positive electrode active substance 24, while the negative electrode layer 14 is constituted by the second vapor-deposited polymer film 30 formed of polyurethane containing the negative electrode active substance 28. Further, the solid electrolyte layer 16 is constituted by the third vapor-deposited polymer film 32 formed of polyurea having a repeating unit structure of polyethylene oxide and containing a lithium salt in the polyethylene oxide.

The first mixture layer 172 is formed of a mixture of polyurethane used to form the positive electrode layer 12, and polyurea used to form the solid electrolyte layer 16, while the second mixture layer 174 is formed of a mixture of polyurethane used to form the negative electrode layer 14, and polyurea used to form the solid electrolyte layer 16. The first and second mixture layers 172, 174 contain the lithium-ion conductivity rendering substance 134, as needed. The first and second mixture layers 172, 174 are electrically conductive.

In the first mixture layer 172, the content of polyurethane gradually decreases in the direction from the positive electrode layer 12 toward the solid electrolyte layer 16, while the content of polyurea gradually increases in the direction from the positive electrode layer 12 toward the solid electrolyte layer 16. In the second mixture layer 174, the content of polyurethane gradually decreases in the direction from the negative electrode layer 14 toward the solid electrolyte layer 16, while the content of polyurea gradually increases in the direction from the negative electrode layer 14 toward the solid electrolyte layer 16. Namely, the contents of polyurethane and polyurea in the first and second mixture layers 172, 174 change linearly in the directions from the positive and negative electrode layers 12, 14 toward the solid electrolyte layer 16.

The lithium-ion secondary battery 166 further has a third mixture layer 168 formed between the positive electrode collector 20 and the positive electrode layer 12, and a fourth mixture layer 170 formed between the negative electrode collector 22 and the negative electrode layer 14. In this embodiment, the positive and negative electrode collectors 20, 22 are formed by a known vacuum vapor-deposition process. The positive electrode collector 20 is constituted by a vapor-deposited aluminum film, while the negative electrode collector 22 is constituted by a vapor-deposited copper film.

The third mixture layer 168 is formed of a mixture of aluminum used to form the positive electrode collector 20, and polyurethane used to form the positive electrode layer 12. The third mixture layer 168 contains the positive electrode active substance 24, as needed. The fourth mixture layer 170 is formed of a mixture of copper used to form the negative electrode collector 22, and polyurethane used to form the negative electrode layer 14. The fourth mixture layer 170 contains the negative electrode active substance 28, as needed. The first and second mixture layers 168, 170 are electrically conductive.

In the third mixture layer 168, the content of aluminum gradually decreases in the direction from the positive electrode collector 20 toward the positive electrode layer 12, while the content of polyurethane gradually increases in the direction from the positive electrode collector 20 toward the positive electrode layer 12. In the fourth mixture layer 170, the content of copper gradually decreases in the direction from the negative electrode collector 22 toward the negative electrode layer 14, while the content of polyurethane gradually increases in the direction from the negative electrode collector 22 toward the negative electrode layer 14. Namely, the contents of aluminum and polyurethane in the third mixture layer 168, and the contents of copper and polyurethane in the fourth mixture layer 170 change linearly in the directions from the positive and negative electrode collectors 20, 22 toward the positive and negative electrode layers 12, 14.

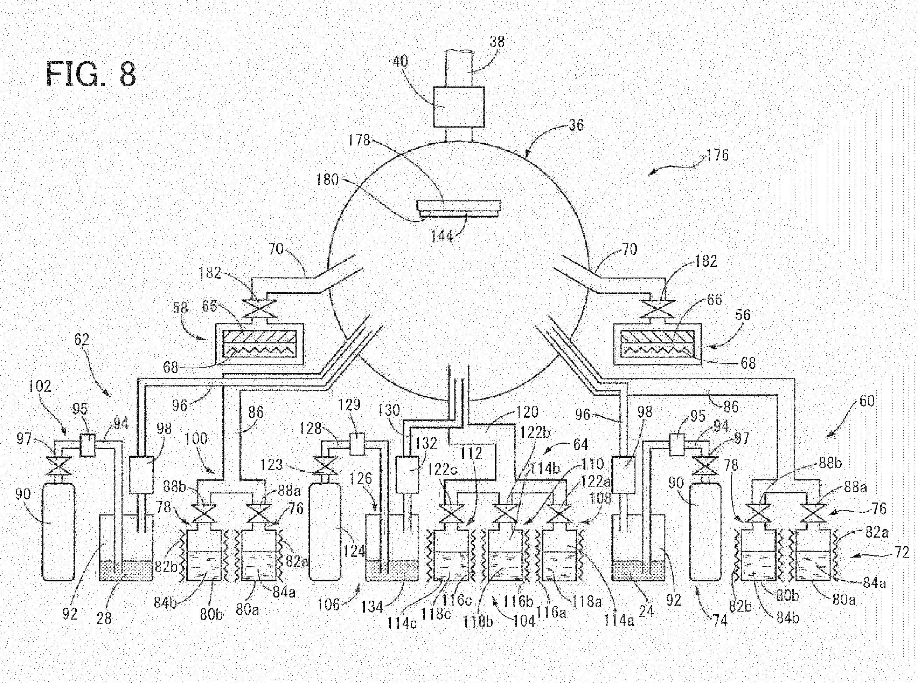

For example, a production apparatus 176 shown in Fig. 8 is suitably used to produce the thus constructed lithium-ion secondary battery 166.

In the production apparatus 176 of this embodiment, a holder 178 is disposed within the vacuum chamber 36, as shown in Fig. 8. The holder 178 has an attachment surface 180 to which the positive-electrode-side protective film 144 can be removably attached. Outside the vacuum chamber 36, there are disposed the positive electrode collector forming unit 56, the negative electrode collector forming unit 58, the positive electrode layer forming unit 60, the negative electrode layer forming unit 62 and the solid electrolyte layer forming unit 64, which are arranged in this order of description in the circumferential direction of the vacuum chamber 36. The nozzles 70, 70 of the positive and negative electrode collector forming units 56, 58, the vapor supply pipes 86, 86 and the powder supply pipes 96, 96 of the positive and negative electrode layer forming units 60, 62, and the vapor supply pipe 120 and the powder supply pipe 30 of the solid electrolyte layer forming unit 64 are disposed so as to be open toward the attachment surface 180 of the holder 178. Further, shut-off valves 182, 182 are provided on the respective nozzles 70, 70 of the positive and negative electrode collector forming units 56, 58.

The desired lithium-ion secondary battery 166 is produced by using the thus constructed production apparatus 176, in the following manner.

Initially, the positive-electrode-side protective film 144 which serves as a substrate is attached to the attachment surface 180 of the holder 178 within the vacuum chamber 36. Then, the vacuum pump 40 is operated to evacuate the inside of the vacuum chamber 36. At this time, the pressure within the vacuum chamber 36 is adjusted to the level as described above with respect to the production of the lithium-ion secondary battery 10 within the vacuum chamber 36.

On the other hand, the vapor-deposition materials 66 accommodated in the positive and negative electrode collector forming units 56, 58, and the materials 84a, 84b, 118a, 118b, 118c accommodated in the positive and negative electrode layer forming units 60, 62 and the solid electrolyte layer forming unit 64 are heated and evaporated by the respective heaters 68, 82a, 82b, 116a, 116b, 116c provided in those forming units 56, 58, 60, 62, 64.

In the present embodiment, the material reservoir 80a of each of the positive and negative electrode layer forming units 60, 62 accommodates aromatic diol such as 1,3-dihydroxyl benzene in a liquid state, for example, as the material 84a, while the material reservoir 80b accommodates aromatic diisocyanate such as 1,4-phenylene diisocyanate in a liquid state, for example, as the material 84b. The material reservoirs 114a, 114b, 114c of the solid electrolyte layer forming unit 64 respectively accommodate ethylene glycol diamine such as diethylene glycol bis(3-aminopropyl) ether, aromatic diisocyanate such as m-xylylene diisocyanate, and olygo-ethylene oxide, in a liquid or solid state, for example.

After the pressure within the vacuum chamber 36 has been adjusted to the predetermined level, only the shut-off valve 182 of the nozzle 70 of the positive electrode collector forming unit 56 is opened so that the vapor of aluminum as the vapor-deposition material 66 accommodated in the positive electrode collector forming unit 56 is introduced into the vacuum chamber 36 through the nozzle 70, whereby the positive electrode collector 20 in the form of the vapor-posited aluminum film is formed on the positive-electrode-side protective film 144 attached to the attachment surface 180 of the holder 178.

After a predetermined length of time has passed after the moment of initiation of opening of the shut-off valve 182, the amount of opening of this shut-off valve 182 is gradually reduced to zero, so that the amount of supply of the vapor of aluminum into the vacuum chamber 36 is gradually reduced to zero.

Upon or immediately before or after initiation of reduction of the amount of opening of the shut-off valve 182, the shut-off valves 88a, 88b of the vapor supply pipe 86 of the first vapor-deposited polymer film forming device 72 of the positive electrode layer forming unit 60 are opened such that the amount of opening of the shut-off valves 88a, 88b is gradually increased to a predetermined constant value, so that the amount of supply of the materials 84a, 84b from the positive electrode layer forming unit 60 into the vacuum chamber 36 is gradually increased to a predetermined constant value. At this time, it is desirable to adjust the rate of reduction of the amount of opening of the shut-off valve 182 of the nozzle 70 of the positive electrode collector forming unit 56, and the rate of increase of the amount of opening of the shut-off valves 88a, 88b of the vapor supply pipe 86 of the first vapor-deposited polymer film forming device 72, so that the pressure within the vacuum chamber 36 is held as constant as possible.

Thus, as the amount of opening of the shut-off valve 182 of the positive electrode collector forming unit 56 is gradually reduced, the amount of further deposition of the vapor of aluminum on the positive electrode collector 20 of a predetermined thickness is gradually reduced, while the amount of production of polyurethane on the positive electrode collector 20 is gradually increased as the amount of opening of the shut-off valves 88a, 88b of the positive electrode layer forming unit 60 is gradually increased. That is, during a time period from the moment of initiation of reduction of the amount of opening of the shut-off valve 182 to the moment at which the shut-off valve 182 is fully closed, the vapor deposition of aluminum constituting the positive electrode collector 20 and the polymerization reaction of the materials 84a, 84b supplied from the first vapor-deposited polymer film forming device 72 take place concurrently to form the above-described third mixture layer 168 on the positive electrode collector 20.

A time period from the moment of initiation of opening of the shut-off valve 182 to the moment of initiation of reduction of the amount of its opening is suitably selected depending upon the desired thickness of the positive electrode collector 20 to be formed. The shut-off valve 97 of the gas cylinder 90 of the positive electrode active substance introducing device 74 of the positive electrode layer forming unit 60 is opened at a point of time between the moment of initiation of opening of the shut-off valves 88a, 88b of the vapor supply pipe 86 and the moment at which the amount of their opening has been increased to a predetermined constant value, or opened at the latter moment.

After a predetermined length of time has passed after the moment at which the amount of opening of the shut-off valves 88a, 88b of the vapor supply pipe 86 of the positive electrode layer forming unit 60 has been increased to the predetermined constant value, the amount of opening of the shut-off valves 88a, 88b is gradually reduced to zero, so that the amount of supply of the materials 84a, 84b from the positive electrode layer forming unit 60 into the vacuum chamber 36 is held constant at the predetermined value for a predetermined length of time, and is subsequently gradually reduced to zero. The shut-off valve 97 of the gas cylinder 90 of the positive electrode layer forming unit 60 is closed at a point of time at which the reduction of the amount of opening of the shut-off valves 88a, 88b is initiated, at a point of time at which the shut-off valves 88a, 88b are fully closed, or at a point of time between the moment of initiation of reduction of the amount of opening of the shut-off valves 88a, 88b and the moment at which the shut-off valves 88a, 88b are fully closed.

Upon or immediately before or after initiation of reduction of the amount of opening of the shut-off valves 88a, 88b, the shut-off valves 122a, 122b, 122c of the vapor supply pipe 120 of the third vapor-deposited polymer film forming device 104 of the solid electrolyte layer forming unit 64 are opened such that the amount of opening of the shut-off valves 122a, 122b, 122c is gradually increased to a predetermined constant value, so that the amount of supply of the materials 118a, 118b, 118c from the solid electrolyte layer forming unit 64 into the vacuum chamber 36 is gradually increased to a predetermined constant value.

At this time, too, it is desirable to adjust the rate of reduction of the amount of opening of the shut-off valves 88a, 88b, and the rate of increase of the amount of opening of the shut-off valves 122a, 122b, 122c, so that the pressure within the vacuum chamber 36 is held as constant as possible. The shut-off valve 123 of the gas cylinder 124 of the lithium-ion conductivity rendering substance introducing device 106 of the solid electrolyte layer forming unit 64 is opened at a point of time between the moment of initiation of opening of the shut-off valves 122a, 122b, 122c of the vapor supply pipe 120 and the moment at which the amount of their opening has been increased to the predetermined constant value, or at the latter moment.

Thus, only polyurethane is produced on the third mixture layer 168 while only the shut-off valves 88a, 88b of the positive electrode layer forming unit 60 are held open by the predetermined amount, so that the positive electrode layer 12 is formed on the third mixture layer 168. A time period during which the shut-off valves 88a, 88b are held open by the predetermined amount is suitably selected depending upon the desired thickness of the positive electrode layer 12 to be formed.

The amount of further production of polyurethane on the positive electrode layer 12 of the predetermined thickness is gradually reduced after the moment of initiation of reduction of the amount of opening of the shut-off valves 88a, 88b of the positive electrode layer forming unit 60, while the amount of production of polyurea on the positive electrode layer 12 is gradually increased after the moment of initiation of opening of the shut-off valves 122a, 122b, 122c of the solid electrolyte layer forming unit 64. That is, during a time period from the moment of initiation of reduction of the amount of opening of the shut-off valves 88a, 88b of the positive electrode layer forming unit 60 to the moment at which the shut-off valves 88a, 88b are fully closed and the amount of the materials 84a, 84b within the vacuum chamber 36 is reduced to zero, the polymerization reaction of these materials 84a, 84b and the polymerization reaction of the materials 118a, 118b, 118c supplied from the solid electrolyte layer forming unit 64 take place concurrently to form the above-described first mixture layer 172 on the positive electrode layer 12.

After a predetermined length of time has passed after the moment at which the amount of opening of the shut-off valves 122a, 122b, 122c of the solid electrolyte layer forming unit 64 has been increased to the predetermined constant value, the amount of opening of these shut-off valves 122a, 122b, 122b is gradually reduced to zero. That is, the materials 118a, 118b, 118c are continuously supplied at a predetermined rate from the solid electrolyte layer forming unit 64 into the vacuum chamber 36 for the predetermined length of time, and the amount of supply of these materials is gradually reduced to zero after the predetermined length of time has passed. The shut-off valve 123 of the gas cylinder 124 of the solid electrolyte layer forming unit 64 is closed at a point of time at which reduction of the amount of opening of the shut-off valves 122a, 122b, 122c of the solid electrolyte layer forming unit 64 is initiated, at a point of time at which the shut-off valves 122a, 122b, 122c are fully closed, or at a point of time between the moment of initiation of reduction of the amount of opening of the shut-off valves 122a, 122b, 122c and the moment at which the shut-off valves 122a, 122b, 122c are fully closed.

On the other hand, upon or immediately before or after initiation of reduction of the amount of opening of the shut-off valves 122a, 122b, 122c of the solid electrolyte layer forming unit 64, the shut-off valves 88a, 88b of the vapor supply pipe 86 of the second vapor-deposited polymer film forming device 100 of the negative electrode layer forming unit 62 are opened such that the amount of opening of the shut-off valves 88a, 88b is gradually increased to a predetermined constant value, so that the amount of supply of the materials 84a, 84b from the negative electrode layer forming unit 62 into the vacuum chamber 36 is gradually increased to a predetermined constant value. The shut-off valve 97 of the gas cylinder 90 of the negative electrode active substance introducing device 102 of the negative electrode layer forming unit 62 is opened at a point of time between the moment of initiation of opening of the shut-off valves 88a, 88b of the vapor supply pipe 86 and the moment at which the amount of their opening has been increased to the predetermined constant value, or opened at the latter moment. A time period from the moment of initiation of opening of the shut-off valves 122a, 122b, 122c of the solid electrolyte layer forming unit 64 to the moment of initiation of reduction of the amount of their opening (a time period from the moment of initiation of opening of the shut-off valves 122a, 122b, 122c to the moment of initiation of opening of the shut-off valves 88a, 88b of the vapor supply pipe 86 of the second vapor-deposited polymer film forming device 100) is suitably selected depending upon the predetermined thickness of the solid electrolyte layer 16.

Thus, as in the case of formation of the first mixture layer 172, during a time period from the moment of initiation of reduction of the amount of opening of the shut-off valves 122a, 122b, 122c of the solid electrolyte layer forming unit 64 to the moment at which the shut-off valves 122a, 122b, 122c are fully closed and the amount of the materials 118a, 118b, 118c within the vacuum chamber 36 is reduced to zero, the polymerization reaction of these materials 118a, 118b, 118c and the polymerization reaction of the materials 84a, 84b supplied from the negative electrode layer forming unit 62 take place concurrently to form the above-described second mixture layer 174 on the solid electrolyte layer 16.

After a predetermined length of time has passed after the moment at which the amount of opening of the shut-off valves 88a, 88b of the negative electrode layer forming unit 62 has been increased to the predetermined constant value, the amount of opening of the shut-off valves 88a, 88b is gradually reduced to zero, so that the amount of supply of the materials 84a, 84b from the negative electrode layer forming unit 62 into the vacuum chamber 36 is held constant at the predetermined value for the predetermined length of time, and is subsequently gradually reduced to zero. The shut-off valve 97 of the gas cylinder 90 of the negative electrode layer forming unit 62 is closed at a point of time at which reduction of the amount of opening of the shut-off valves 88a, 88b is initiated, at a point of time at which the shut-off valves 88a, 88b are fully closed, or at a point of time between the moment of initiation of reduction of the amount of opening of the shut-off valves 88a, 88b and the moment at which the shut-off valves 88a, 88b are fully closed.

On the other hand, upon or immediately before or after initiation of reduction of the amount of opening of the shut-off valves 88a, 88b of the negative electrode layer forming unit 62, the shut-off valve 182 of the nozzle 70 of the negative electrode collector forming unit 58 is opened such that the amount of opening of the shut-off valve 182 is gradually increased to a predetermined constant value, so that the amount of supply of the vapor of copper from the negative electrode collector forming unit 58 into the vacuum chamber 36 is gradually increased to a predetermined constant value.

Thus, as in the case of formation of the third mixture layer 168, during a time period from the moment of initiation of reduction of the amount of opening of the shut-off valves 88a, 88b of the negative electrode layer forming unit 62 to the moment at which the shut-off valves 88a, 88b are fully closed and the amount of the materials 84a, 84b within the vacuum chamber 36 is reduced to zero, the polymerization reaction of these materials 84a, 84b supplied from the negative electrode layer forming unit 62 and the vapor deposition of copper constituting the negative electrode collector 22 take place concurrently to form the above-described fourth mixture layer 170 on the negative electrode layer 14.

After a predetermined length of time has passed after the moment at which the amount of opening of the shut-off valve 182 of the negative electrode collector forming unit 58 has been increased to the predetermined constant value, the shut-off valve 182 is closed. Thus, the negative electrode collector 22 is formed on the fourth mixture layer 170 with a predetermined thickness, whereby the lithium-ion secondary battery 166 constructed as shown in Fig. 7 is obtained. A time period from the moment at which the amount of opening of the shut-off valves 88a, 88b of the negative electrode layer forming unit 62 is increased to the predetermined constant value to the moment of initiation of reduction of the amount of their opening is suitably selected depending upon the predetermined thickness of the negative electrode layer 14. Also, a time period from the moment at which the amount of opening of the shut-off valve 182 of the nozzle 70 of the negative electrode collector forming unit 58 is increased to the predetermined constant value to the moment at which the shut-off valve 182 is closed is suitably selected depending upon the predetermined thickness of the negative electrode collector 22.

It will be understood from the foregoing description of this embodiment that this embodiment has substantially the same operational and physical advantages as described above with respect to the above-described several embodiments.

The present embodiment is further configured such that the steps of forming the first and second mixture layers 168, 170 respectively between the positive electrode collector 20 and the positive electrode layer 12 and between the negative electrode collector 22 and the negative electrode layer 14, and the steps of forming the third and fourth mixture layers 172, 174 respectively between the positive electrode layer 12 and the solid electrolyte layer 16 and between the negative electrode layer 14 and the solid electrolyte layer 16, are successively performed as a series of operations within the vacuum chamber 36. Accordingly, the positive and negative electrode layers 12, 14 and the solid electrolyte layer 16 do not have any distinct boundary interface therebetween, and the positive electrode collector 20 and the positive electrode layer 12, and the negative electrode collector 22 and the negative electrode layer 14 do not have any distinct boundary interface therebetween, so that the lithium-ion secondary battery 166 having advantageously improved electron conductivity and ion conductivity and effectively improved output density can be surely and efficiently produced with a high degree of productivity.

While the embodiments of the present invention have been described above in detail for illustrative purpose only, it is to be understood that the invention is not limited to the details of the illustrated embodiments.

In the above-described first to fifth embodiments, the desired lithium-ion secondary batteries 10, 162, 166 are produced by using the production apparatuses 34, 142, 148, 164, 176 each having one vacuum chamber 36, and by successively performing the steps of forming the positive electrode layer 12, the solid electrolyte layer 16 and the negative electrode layer 14, and the steps of forming the positive and negative electrode collectors 20, 22, as a series of operations within the vacuum chamber 36. However, at least one of the above-described five steps may be performed independently of the other steps, by using an apparatus which is separate from an apparatus used for performing the other steps.

Further, in the above-described first to fifth embodiments, the positive electrode layer forming unit 60, the negative electrode layer forming unit 62 and the solid electrolyte layer forming unit 64 are configured such that the powder supply pipes 96, 130 (in the first, second, fourth and fifth embodiments) and the gas supply pipe 128 (in the third embodiment) are partially inserted within the corresponding vapor supply pipes 86, 120, such that the outlet open ends of the powder supply pipes 96, 130 and the gas supply pipe 128 are located within the corresponding vapor supply pipes 86, 120. This configuration is employed to ensure introduction of the positive and negative electrode active substances 24, 28 and the lithium-ion conductivity rendering substance 134 into the first, second and third vapor-deposited polymer films 26, 30, 32, by blowing the positive and negative electrode active substances 24, 28 and the lithium-ion conductivity rendering substance 134 onto the substrate constituted by the aluminum foil strip 5050 or the positive-electrode-side protective film 144, together with the materials 84a, 84b, 118a, 118b, 118c, preferably in the form of the mixtures of the substances 24, 28, 134 and the materials 84a, 84b, 118a, 118b, 118c, before termination of the polymerization reactions of the materials 84a, 84b, 118a, 118b, 118c which reactions are completed in a moment. Therefore, the powder supply pipes 96, 130 and the gas supply pipe 128 may be disposed in parallel with the corresponding vapor supply pipes 86, as long as the positive and negative electrode active substances 24, 28 and the lithium-ion conductivity rendering substance 134 can be blown onto the substrate, together with the materials 84a, 84b, 118a, 118b, 118c, before completion of the polymerization reaction of these materials 84a, 84b, 118a, 118b, 118c. In this case, the outlet open ends of the powder supply pipes 96, 130 and the gas supply pipe 128 are preferably positioned upstream of the outlet open ends of the corresponding vapor supply pipes 86, as seen in the direction of feeding of the substrate by the main roller 42, so that the positive and negative electrode active substances 24, 28 and the lithium-ion conductivity rendering substance 134 can be surely mixed with the materials 84a, 84b, 118a, 118b, 118c before completion of the polymerization reaction of these materials 84a, 84b, 118a, 118b, 118c.

Even where the powder supply pipes 96, 130 and the gas supply pipe 128 are partially inserted within the vapor supply pipes 86, 120, the corresponding outlet end portions of these pipes 96, 130, 128, 86, 120 need not cooperate with each other to form the double-pipe structure. The outlet end portions of the powder supply pipes 96, 130 and the gas supply pipe 128 may be inserted within the corresponding vapor supply pipes 86, 120 through the pipe walls of the vapor supply pipes 86, 120, such that the outlet end portions of the powder supply pipes 96, 130 and the gas supply pipe 128 extend perpendicular to the direction of extension of the outlet end portions of the corresponding vapor supply pipes 86, 120.

In the above-described fifth embodiment, the first and second mixture layers 168, 170 are respectively formed between the positive electrode collector 20 and the positive electrode layer 12 and between the negative electrode collector 22 and the negative electrode layer 14, while the third and fourth mixture layers 172, 174 are respectively formed between the positive electrode layer 12 and the solid electrolyte layer 16 and between the negative electrode layer 14 and the solid electrolyte layer 16. However, the lithium-ion secondary battery 166 according to the fifth embodiment may be modified such that at least one of the first through fourth mixture layers 168, 170, 172, 174 is formed.

In the above-described several embodiments, the laminar body 18 is produced by initially forming the positive electrode layer 12, and then forming the solid electrolyte layer 16 on the positive electrode layer 12, and further forming the negative electrode layer 14 on the solid electrolyte layer 16. However, the laminar body 18 may be produced by initially forming the negative electrode layer 14, and then forming the solid electrolyte layer 16 on the negative electrode layer 14, and further forming the positive electrode layer 12 on the solid electrolyte layer 16, contrary to the above-described order of formation of the layers.

Further, the laminar body 18 may be produced by initially forming a laminar structure of the positive electrode layer 12 and the solid electrolyte layer 16 which are superposed on each other, and then superposing the negative electrode layer 14, which is formed separately from the laminar structure, on the laminar structure. Also, the laminar body 18 may be produced by initially forming a laminar structure of the negative electrode layer 14 and the solid electrolyte layer 16 which are superposed on each other, and then superposing the positive electrode layer 12, which is formed separately from the laminar structure, on the laminar structure. Alternatively, the laminar body 18 may be produced by forming the positive electrode layer 12, the solid electrolyte layer 16 and the negative electrode layer 14, separately from each other, and then superposing the thus formed layers 12, 16, 14 with each other. Each of the positive electrode layer 12 and the negative electrode layer 14 may be constituted by a plurality of layers.

In the case where the first mixture layer 172 is formed between the positive electrode layer 12 and the solid electrolyte layer 16, it is possible to initially form the solid electrolyte layer 16, and then form the first mixture layer 172 on the solid electrolyte layer 16, and then form the positive electrode layer 12 on the first mixture layer 172. In such a case, after the amount of opening of the shut-off valves 122a, 122b, 122c of the solid electrolyte layer forming unit 64 has been held at a predetermined constant value for a predetermined length of time, the amount of opening of these shut-off valves 122a, 122b, 122b are gradually reduced to zero. On the other hand, upon or immediately before or after initiation of reduction of the amount of opening of the shut-off valves 122a, 122b, 122c, the shut-off valves 88a, 88b of the positive electrode layer forming unit 60 are opened such that the amount of opening of the shut-off valves 88a, 88b is gradually increased to a predetermined constant value. Thus, during a time period from the moment of initiation of reduction of the amount of opening of the shut-off valves 122a, 122b, 122c of the solid electrolyte layer forming unit 64 to the moment at which the shut-off valves 122a, 122b, 122c are fully closed and the amount of the materials 118a, 118b, 118c within the vacuum chamber 36 is reduced to zero, the polymerization reaction of these materials 118a, 118b, 118c supplied from the solid electrolyte layer forming unit 64 and the polymerization reaction of the materials 84a, 84b supplied from the positive electrode layer forming unit 60 take place concurrently to form the first mixture layer 172 on the solid electrolyte layer 16.

In the case where the second mixture layer 174 is formed between the negative electrode layer 14 and the solid electrolyte layer 16, it is possible to initially form the negative electrode layer 14, and then form the second mixture layer 174 on the negative electrode layer 14, and then form the solid electrolyte layer 16 on the second mixture layer 174. In such a case, after the amount of opening of the shut-off valves 88a, 88b of the negative electrode layer forming unit 62 has been held at a predetermined constant value for a predetermined length of time, the amount of opening of these shut-off valves 88a, 88b are gradually reduced to zero. On the other hand, upon or immediately before or after initiation of reduction of the amount of opening of the shut-off valves 88a, 88b, the shut-off valves 122a, 122b, 122c of the solid electrolyte layer forming unit 64 are opened such that the amount of opening of the shut-off valves 122a, 122b, 122c is gradually increased to a predetermined constant value. Thus, during a time period from the moment of initiation of reduction of the amount of opening of the shut-off valves 88a, 88b of the negative electrode layer forming unit 62 to the moment at which the shut-off valves 88a, 88b are fully closed and the amount of the materials 84a, 84b within the vacuum chamber 36 is reduced to zero, the polymerization reaction of these materials 88a, 88b supplied form the negative electrode layer forming unit 62 and the polymerization reaction of the materials 118a, 118b, 118c supplied from the solid electrolyte layer forming unit 64 take place concurrently to form the second mixture layer 174 on the negative electrode layer 14.

In the case where the third mixture layer 168 is formed between the positive electrode layer 12 and the positive electrode collector 20, it is possible to initially form the positive electrode layer 12, and then form the third mixture layer 168 on the positive electrode layer 12, and then form the positive electrode layer 12 on the third mixture layer 168. In such a case, after the amount of opening of the shut-off valves 88a, 88b of the positive electrode layer forming unit 60 has been held at a predetermined constant value for a predetermined length of time, the amount of opening of these shut-off valves 88a, 88b are gradually reduced to zero. On the other hand, upon or immediately before or after initiation of reduction of the amount of opening of the shut-off valves 88a, 88b, the shut-off valve 182 of the positive electrode collector forming unit 56 is opened such that the amount of opening of the shut-off valve 182 is gradually increased to a predetermined constant value. Thus, during a time period from the moment of initiation of reduction of the amount of opening of the shut-off valves 88a, 88b of the positive electrode layer forming unit 60 to the moment at which the shut-off valves 88a, 88b are fully closed and the amount of the materials 84a, 84b within the vacuum chamber 36 is reduced to zero, the polymerization reaction of these materials 88a, 88b supplied form the positive electrode layer forming unit 60 and the vapor deposition of the metallic vapor supplied from the positive electrode collector forming unit 56 take place concurrently to form the third mixture layer 168 on the positive electrode layer 12.

In the case where the fourth mixture layer 170 is formed between the negative electrode layer 14 and the negative electrode collector 22, it is possible to initially form the negative electrode collector 22, and then form the fourth mixture layer 170 on the negative electrode collector 22, and then form the negative electrode layer 14 on the fourth mixture layer 170. In such a case, after the amount of opening of the shut-off valve 182 of the negative electrode collector forming unit 58 has been held at a predetermined constant value for a predetermined length of time, the amount of opening of the shut-off valve 182 is gradually reduced to zero. On the other hand, upon or immediately before or after initiation of reduction of the amount of opening of the shut-off valve 182, the shut-off valves 88a, 88b of the negative electrode layer forming unit 62 are opened such that the amount of opening of the shut-off valves 88a, 88b is gradually increased to a predetermined constant value. Thus, during a time period from the moment of initiation of reduction of the amount of opening of the shut-off valve 182 of the negative electrode collector forming unit 58 to the moment at which the shut-off valve 182 is fully closed and the amount of the metallic vapor within the vacuum chamber 36 is reduced to zero, the vapor deposition of the metallic vapor supplied form the negative electrode collector forming unit 58 and the polymerization reaction of the materials 84a, 84b supplied from the negative electrode collector forming unit 58 take place concurrently to form the fourth mixture layer 170 on the negative electrode collector 22.

The positive and negative electrode collectors 20, 22 may be omitted where the positive and negative electrode layers 12,14 have a sufficiently high degree of electron conductivity.

It is to be understood that the present invention may be embodied with various other changes, modifications and improvements, which may occur to those skilled in the art, without departing from the spirit and scope of the invention, and that such changes, modifications, and improvements are also within the scope of the invention.

### NOMENCLATURE OF REFERENCE SIGNS

10, 162, 166: Lithium-ion secondary battery
12: Positive electrode layer 14: Negative electrode layer
16: Solid electrolyte layer 18: Laminar body
20: Positive electrode collector
22: Negative electrode collector
24: Positive electrode active substance
26: First vapor-deposited polymer film
28: Negative electrode active substance
30: Second vapor-deposited polymer film
32: Third vapor-deposited polymer film
34, 142, 148, 164, 176: Production apparatus
38: Exhaust pipe
40: Vacuum pump
50: Aluminum foil strip
52: Copper foil strip
56: Positive electrode collector forming unit
58: Negative electrode collector forming unit
60: Positive electrode layer forming unit
62: Negative electrode layer forming unit
64, 150: Solid electrolyte layer forming unit
72: First vapor-deposited polymer film forming device
74: Positive electrode active substance introducing device
100: Second vapor-deposited polymer film forming device
102: Negative electrode active substance introducing device
104, 152: Third vapor-deposited polymer film forming device
106, 154: Lithium-ion conductivity rendering substance introducing device
134: Lithium-ion conductivity rendering substance
168: Third mixture layer
170: Fourth mixture layer
172: First mixture layer
174: Second mixture layer

## Claims

1. A method of producing a lithium-ion secondary battery having a laminar body wherein a positive electrode layer and a negative electrode layer are laminated on respective opposite surfaces of a solid electrolyte layer, the method being **characterized by** comprising the steps of:
forming a first vapor-deposited polymer film by a vapor-deposition polymerization process while introducing a positive electrode active substance into the first vapor-deposited polymer film, to form the positive electrode layer constituted by the first vapor-deposited polymer film containing the positive electrode active substance;
forming a second vapor-deposited polymer film by the vapor-deposition polymerization process while introducing a negative electrode active substance into the second vapor-deposited polymer film, to form the negative electrode layer constituted by the second vapor-deposited polymer film containing the negative electrode active substance; and
forming a third vapor-deposited polymer film by the vapor-deposition polymerization process while introducing a lithium-ion conductivity rendering substance into the third vapor-deposited polymer film, to form the solid electrolyte layer constituted by the third vapor-deposited polymer film containing the lithium-ion conductivity rendering substance and having lithium-ion conductivity.

2. The method of producing a lithium-ion secondary battery according to claim 1, wherein the positive electrode active substance is introduced into the first vapor-deposited polymer film by blowing a first carrier gas in which the positive electrode active substance is dispersed, onto the first vapor-deposited polymer film, and the negative electrode active substance is introduced into the second vapor-deposited polymer film by blowing a second carrier gas in which the negative electrode active substance is dispersed, onto the second vapor-deposited polymer film, while the lithium-ion conductivity rendering substance is introduced into the third vapor-deposited polymer film by blowing a third carrier gas in which the lithium-ion conductivity rendering substance is dispersed, onto the third vapor-deposited polymer film.

3. The method of producing a lithium-ion secondary battery according to claim 1 or 2, wherein the lithium-ion conductivity rendering substance is a lithium salt, and the third vapor-deposited polymer film contains an ion-conductive polymer.

4. The method of producing a lithium-ion secondary battery according to claim 1 or 2, wherein the lithium-ion conductivity rendering substance is an ion-conductive polymer in a liquid state in which a lithium salt is dissolved.

5. The method of producing a lithium-ion secondary battery according to any one of claims 1 to 4, wherein the first vapor-deposited polymer film and the second vapor-deposited polymer film have electron conductivity.

6. The method of producing a lithium-ion secondary battery according to any one of claims 1 to 5, wherein the step of forming the positive electrode layer comprising introducing vapors of a plurality of materials for forming the positive electrode layer, into a reaction chamber in an evacuated state, so that the introduced vapors are polymerized to form the first vapor-deposited polymer film, and at the same time introducing the positive electrode active substance into the first vapor-deposited polymer film, whereby the positive electrode layer is formed, and
the step of forming the solid electrolyte layer comprising introducing vapors of a plurality of materials for forming the solid electrolyte layer, into the reaction chamber, after a predetermined length of time has passed after initiation of the step of forming the positive electrode layer, so that the introduced vapors are polymerized to form the third vapor-deposited polymer film, and at the same time introducing the lithium-ion conductivity rendering substance into the third vapor-deposited polymer film, whereby the solid electrolyte layer is formed on the positive electrode layer,
wherein amounts of introduction of the vapors of the plurality of materials for forming the positive electrode layer into the reaction chamber are gradually reduced to zero after initiation of introduction of the vapors of the plurality of materials for forming the solid electrolyte layer into the reaction chamber, so that polymerization of the plurality of materials for forming the positive electrode layer and polymerization of the plurality of materials for forming the solid electrolyte layer take place concurrently with each other, to form a first mixture layer on the positive electrode layer, before formation of the solid electrolyte layer, the first mixture layer being formed of a mixture consisting of a product obtained by the polymerization of the plurality of materials for forming the positive electrode layer and a product obtained by the polymerization of the plurality of materials for forming the solid electrolyte layer.

7. The method of producing a lithium-ion secondary battery according to any one of claims 1 to 5, wherein the step of forming the solid electrolyte layer comprising introducing vapors of a plurality of materials for forming the solid electrolyte layer, into a reaction chamber in an evacuated state, so that the introduced vapors are polymerized to form the third vapor-deposited polymer film, and at the same time introducing the lithium-ion conductivity rendering substance into the third vapor-deposited polymer film, whereby the solid electrolyte layer is formed, and
the step of forming the positive electrode layer comprising introducing vapors of a plurality of materials for forming the positive electrode layer, into the reaction chamber, after a predetermined length of time has passed after initiation of the step of forming the solid electrolyte layer, so that the introduced vapors are polymerized to form the first vapor-deposited polymer film, and at the same time introducing the positive electrode active substance into the first vapor-deposited polymer film, whereby the positive electrode layer is formed on the solid electrolyte layer,
wherein amounts of introduction of the vapors of the plurality of materials for forming the solid electrolyte layer into the reaction chamber are gradually reduced to zero after initiation of introduction of the vapors of the plurality of materials for forming the negative electrode layer into the reaction chamber, so that polymerization of the plurality of materials for forming the solid electrolyte layer and polymerization of the plurality of materials for forming the positive electrode layer take place concurrently with each other, to form a first mixture layer on the solid electrolyte layer, before formation of the positive electrode layer, the first mixture layer being formed of a mixture consisting of a product obtained by the polymerization of the plurality of materials for forming the solid electrolyte layer and a product obtained by the polymerization of the plurality of materials for forming the positive electrode layer.

8. The method of producing a lithium-ion secondary battery according to any one of claims 1 to 6, wherein the step of forming the solid electrolyte layer comprising introducing vapors of a plurality of materials for forming the solid electrolyte layer, into a reaction chamber in an evacuated state, so that the introduced vapors are polymerized to form the third vapor-deposited polymer film, and at the same time introducing the lithium-ion conductivity rendering substance into the third vapor-deposited polymer film, whereby the solid electrolyte layer is formed, and
the step of forming the negative electrode layer comprising introducing vapors of a plurality of materials for forming the negative electrode layer, into the reaction chamber, after a predetermined length of time has passed after initiation of the step of forming the solid electrolyte layer, so that the introduced vapors are polymerized to form the second vapor-deposited polymer film, and at the same time introducing the negative electrode active substance into the second vapor-deposited polymer film, whereby the negative electrode layer is formed on the solid electrolyte layer,
wherein amounts of introduction of the vapors of the plurality of materials for forming the solid electrolyte layer into the reaction chamber are gradually reduced to zero after initiation of introduction of the vapors of the plurality of materials for forming the negative electrode layer into the reaction chamber, so that polymerization of the plurality of materials for forming the solid electrolyte layer and polymerization of the plurality of materials for forming the negative electrode layer take place concurrently with each other, to form a second mixture layer on the solid electrolyte layer, before formation of the negative electrode layer, the second mixture layer being formed of a mixture consisting of a product obtained by the polymerization of the plurality of materials for forming the solid electrolyte layer and a product obtained by the polymerization of the plurality of materials for forming the negative electrode layer.

9. The method of producing a lithium-ion secondary battery according to any one of claims 1 to 5 and 7, wherein the step of forming the negative electrode layer comprising introducing vapors of a plurality of materials for forming the negative electrode layer, into a reaction chamber in an evacuated state, so that the introduced vapors are polymerized to form the second vapor-deposited polymer film, and at the same time introducing the negative electrode active substance into the second vapor-deposited polymer film, whereby the negative electrode layer is formed, and
the step of forming the solid electrolyte layer comprising introducing vapors of a plurality of materials for forming the solid electrolyte layer, into the reaction chamber, after a predetermined length of time has passed after initiation of the step of forming the negative electrode layer, so that the introduced vapors are polymerized to form the third vapor-deposited polymer film, and at the same time introducing the lithium-ion conductivity rendering substance into the third vapor-deposited polymer film, whereby the solid electrolyte layer is formed on the negative electrode layer,
wherein amounts of introduction of the vapors of the plurality of materials for forming the negative electrode layer into the reaction chamber are gradually reduced to zero after initiation of introduction of the vapors of the plurality of materials for forming the solid electrolyte layer into the reaction chamber, so that polymerization of the plurality of materials for forming the negative electrode layer and polymerization of the plurality of materials for forming the solid electrolyte layer take place concurrently with each other, to form a second mixture layer on the negative electrode layer, before formation of the solid electrolyte layer, the second mixture layer being formed of a mixture consisting of a product obtained by the polymerization of the plurality of materials for forming the negative electrode layer and a product obtained by the polymerization of the plurality of materials for forming the solid electrolyte layer.

10. The method of producing a lithium-ion secondary battery according to any one of claims 1 to 9, further comprising the steps of:
forming a positive electrode collector by vapor-deposition of a metallic material on one of opposite surfaces of the positive electrode layer, which surface is remote from the solid electrolyte layer; and
forming a negative electrode collector by vapor-deposition of a metallic material on one of opposite surfaces of the negative electrode layer, which surface is remote from the solid electrolyte layer.

11. The method of producing a lithium-ion secondary battery according to claim 10, wherein the step of forming the positive electrode collector comprising introducing a vapor of the metallic material for forming the positive electrode collector, into a reaction chamber in an evacuated state, so that the introduced vapor is deposited on a substrate disposed within the vacuum chamber, whereby the positive electrode collector is formed, and
the step of forming the positive electrode layer comprising introducing vapors of a plurality of materials for forming the positive electrode layer, into the reaction chamber, after a predetermined length of time has passed after initiation of the step of forming the positive electrode collector, so that the introduced vapors are polymerized to form the first vapor-deposited polymer film, and at the same time introducing the positive electrode active substance into the first vapor-deposited polymer film, whereby the positive electrode layer is formed on the positive electrode collector,
wherein an amount of introduction of the vapor of the metallic material for forming the positive electrode collector into the reaction chamber is gradually reduced to zero after initiation of introduction of the vapors of the plurality of materials for forming the positive electrode layer into the reaction chamber, so that deposition of the vapor of the metallic material for forming the positive electrode collector on the substrate and polymerization of the plurality of materials for forming the positive electrode layer take place concurrently with each other, to form a third mixture layer on the positive electrode collector, before formation of the positive electrode layer, the third mixture layer being formed of a mixture consisting of the metallic material for forming the positive electrode collector and a product obtained by the polymerization of the plurality of materials for forming the positive electrode layer.

12. The method of producing a lithium-ion secondary battery according to claim 10, wherein the step of forming the positive electrode layer comprising introducing vapors of a plurality of materials for forming the positive electrode layer, into a reaction chamber in an evacuated state, so that the introduced vapors are polymerized to form the first vapor-deposited polymer film, and at the same time introducing the positive electrode active substance into the first vapor-deposited polymer film, whereby the positive electrode layer is formed, and
the step of forming the positive electrode collector comprising introducing a vapor of the metallic material for forming the positive electrode collector, into the reaction chamber, after a predetermined length of time has passed after initiation of the step of forming the positive electrode layer, so that the introduced vapor is deposited on the positive electrode layer, whereby the positive electrode collector is formed,
wherein amounts of introduction of the vapors of the plurality of materials for forming the positive electrode layer into the reaction chamber are gradually reduced to zero after initiation of introduction of the metallic material for forming the positive electrode collector into the reaction chamber, so that polymerization of the plurality of materials for forming the positive electrode layer and deposition of the vapor of the metallic material for forming the positive electrode collector on the positive electrode layer take place concurrently with each other, to form a third mixture layer on the positive electrode layer, before formation of the positive electrode collector, the third mixture layer being formed of a mixture consisting of a product obtained by the polymerization of the plurality of materials for forming the positive electrode layer and the metallic material for forming the positive electrode collector.

13. The method of producing a lithium-ion secondary battery according to any one of claims 10 to 12, wherein the step of forming the negative electrode collector comprising introducing a vapor of the metallic material for forming the negative electrode collector, into a reaction chamber in an evacuated state, so that the introduced vapor is deposited on a substrate disposed within the vacuum chamber, whereby the negative electrode collector is formed, and
the step of forming the negative electrode layer comprising introducing vapors of a plurality of materials for forming the negative electrode layer, into the reaction chamber, after a predetermined length of time has passed after initiation of the step of forming the negative electrode collector, so that the introduced vapors are polymerized to form the second vapor-deposited polymer film, and at the same time introducing the negative electrode active substance into the second vapor-deposited polymer film, whereby the negative electrode layer is formed on the negative electrode collector,
wherein an amount of introduction of the vapor of the metallic material for forming the negative electrode collector into the reaction chamber is gradually reduced to zero after initiation of introduction of the vapors of the plurality of materials for forming the negative electrode layer into the reaction chamber, so that deposition of the vapor of the metallic material for forming the negative electrode collector on the substrate and polymerization of the plurality of materials for forming the negative electrode layer take place concurrently with each other, to form a fourth mixture layer on the negative electrode collector, before formation of the negative electrode layer, the fourth mixture layer being formed of a mixture consisting of the metallic material for forming the negative electrode collector and a product obtained by the polymerization of the plurality of materials for forming the negative electrode layer.

14. The method of producing a lithium-ion secondary battery according to any one of claims 10 to 12, wherein the step of forming the negative electrode layer comprising introducing vapors of a plurality of materials for forming the negative electrode layer, into a reaction chamber in an evacuated state, so that the introduced vapors are polymerized to form the second vapor-deposited polymer film, and at the same time introducing the negative electrode active substance into the second vapor-deposited polymer film, whereby the negative electrode layer is formed, and
the step of forming the negative electrode collector comprising introducing a vapor of the metallic material for forming the negative electrode collector, into the reaction chamber, after a predetermined length of time has passed after initiation of the step of forming the negative electrode layer, so that the introduced vapor is deposited on the negative electrode layer, whereby the negative electrode collector is formed,
wherein amounts of introduction of the vapors of the plurality of materials for forming the negative electrode layer into the reaction chamber are gradually reduced to zero after initiation of introduction of the metallic material for forming the negative electrode collector into the reaction chamber, so that polymerization of the plurality of materials for forming the negative electrode layer and deposition of the vapor of the metallic material for forming the negative electrode collector on the negative electrode layer take place concurrently with each other, to form a fourth mixture layer on the negative electrode layer, before formation of the negative electrode collector, the fourth mixture layer being formed of a mixture consisting of a product obtained by the polymerization of the plurality of materials for forming the negative electrode layer and the metallic material for forming the negative electrode collector.

15. An apparatus for producing a lithium-ion secondary battery having a laminar body wherein a positive electrode layer and a negative electrode layer are laminated on respective opposite surfaces of a solid electrolyte layer, **characterized by** comprising:
a vacuum chamber in which a substrate is accommodated;
evacuating means for evacuating an interior space of the vacuum chamber by discharging air within the vacuum chamber;
a positive electrode layer forming unit configured to form the positive electrode layer constituted by a first vapor-deposited polymer film containing a positive electrode active substance, the positive electrode layer forming unit including first vapor-deposited polymer film forming means for forming the first vapor-deposited polymer film by a vapor-deposition polymerization process, within the vacuum chamber in an evacuated state, and positive electrode active substance introducing means for introducing the positive electrode active substance into the first vapor-deposited polymer film, during formation of the first vapor-deposited polymer film;
a negative electrode layer forming unit configured to form the negative electrode layer constituted by a second vapor-deposited polymer film containing a negative electrode active substance, the negative electrode layer forming unit including second vapor-deposited polymer film forming means for forming the second vapor-deposited polymer film by the vapor-deposition polymerization process, within the vacuum chamber in the evacuated state, and negative electrode active substance introducing means for introducing the negative electrode active substance into the second vapor-deposited polymer film, during formation of the second vapor-deposited polymer film; and
a solid electrolyte layer forming unit configured to form the solid electrolyte layer constituted by a third vapor-deposited polymer film containing a lithium-ion conductivity rendering substance, the solid electrolyte layer forming unit including third vapor-deposited polymer film forming means for forming the third vapor-deposited polymer film by the vapor-deposition polymerization process, within the vacuum chamber in the evacuated state, and lithium-ion conductivity rendering substance introducing means for introducing the lithium-ion conductivity rendering substance into the third vapor-deposited polymer film, during formation of the third vapor-deposited polymer film;
wherein the positive electrode layer forming unit, the negative electrode layer forming unit and the solid electrolyte layer forming unit cooperate with each other to form the laminar body on the substrate accommodated within the vacuum chamber.

16. The apparatus for producing a lithium-ion secondary battery according to claim 15, wherein the positive electrode active substance introducing means of the positive electrode layer forming unit is configured to introduce the positive electrode active substance into the first vapor-deposited polymer film by blowing a first carrier gas in which the positive electrode active substance is dispersed, onto the first vapor-deposited polymer film, during formation of the first vapor-deposited polymer film, and the negative electrode active substance introducing means of the negative electrode layer forming unit is configured to introduce the negative electrode active substance into the second vapor-deposited polymer film by blowing a second carrier gas in which the negative electrode active substance is dispersed, onto the second vapor-deposited polymer film, during formation of the second vapor-deposited polymer film, while the lithium-ion conductivity rendering substance introducing means of the solid electrolyte layer forming unit is configured to introduce the lithium-ion conductivity rendering substance into the third vapor-deposited polymer film by blowing a third carrier gas in which the lithium-ion conductivity rendering substance is dispersed, onto the third vapor-deposited polymer film, during formation of the third vapor-deposited polymer film.

17. The apparatus for producing a lithium-ion secondary battery according to claim 15 or 16, wherein the third vapor-deposited polymer film forming means of the solid electrolyte layer forming unit is configured to form the third vapor-deposited polymer film containing an ion-conductive polymer, and the lithium-ion conductivity rendering substance introducing means is configured to introduce a lithium salt as the lithium-ion conductivity rendering substance, into the third vapor-deposited polymer film.

18. The apparatus for producing a lithium-ion secondary battery according to claim 15 or 16, wherein the lithium-ion conductivity rendering substance introducing means of the solid electrolyte layer forming unit is configured to introduce an ion-conductive polymer in a liquid state in which a lithium salt is dissolved, as the lithium-ion conductivity rendering substance, into the third vapor-deposited polymer film.

19. The apparatus for producing a lithium-ion secondary battery according to any one of claims 15 to 18, further comprising:
a positive electrode collector forming unit for forming a vapor-deposited metal film as a positive electrode collector on one of opposite surfaces of the positive electrode layer, which surface is remote from the solid electrolyte layer, by a vapor-deposition process within the vacuum chamber in the evacuated state; and
a negative electrode collector forming unit for forming a vapor-deposited metal film as a negative electrode collector on one of opposite surfaces of the negative electrode layer, which surface is remote from the solid electrolyte layer, by the vapor-deposition process within the vacuum chamber in the evacuated state.
